# EUROPÄISCHE PATENTSCHRIFT

(11) **EP 4 381 206 B1**
(45) Veröffentlichungstag und Bekanntmachung des Hinweises auf die Patenterteilung: **10.09.2025**
(21) Anmeldenummer: 22755157.9
(22) Anmeldetag: 25.07.2022
(51) Int. Cl.: F04D 25/16, F16H 57/04, F16H 1/06, F16H 57/021, F16H 1/20

(54) **STIRNRADGETRIEBE**
SPUR GEAR TRANSMISSION
TRANSMISSION PAR ENGRENAGE CYLINDRIQUE À DENTURE DROITE

(30) Priorität: 03.08.2021 DE 102021120098
(43) Veröffentlichungstag der Anmeldung: 12.06.2024
(73) Patentinhaber: Voith Patent GmbH, 89522 Heidenheim (DE)
(72) Erfinder: STOLZ, Tobias, 74589 Satteldorf (DE); VOGEL, Peter, 74564 Crailsheim (DE); PFAU, Bastian, 74564 Crailsheim (DE); REITHEMANN, Florian, 87527 Sonthofen (DE); JAHNKE, Felix, 87527 Sonthofen (DE)
(74) Vertreter: Voith Patent GmbH - Patentabteilung
(86) Internationale Anmeldenummer: PCT/EP2022/070763
(87) Internationale Veröffentlichungsnummer: WO 2023/011956

(56) Entgegenhaltungen:
- EP-A1- 1 855 030
- DE-U1- 29 517 964
- US-A- 5 085 100
- US-A- 5 404 964

## Beschreibung

Die vorliegende Erfindung betrifft ein Stirnradgetriebe mit wenigstens zwei verzahnten Stirnrädern gemäß dem Oberbegriff von Anspruch 1.

Stirnradgetriebe der gattungsgemäßen Art sind beispielsweise aus WO 2012/028231 A1, WO 2015/177332 A1, WO 2017/207215 A1 und WO 2017/072211 A1 bekannt. Mit solchen Stirnradgetrieben werden beispielsweise Verdichterstufen in der Petrochemie-, Erdöl- und Gasindustrie, Kältetechnik, Luftzerlegungsanlagen (Air-Separation-Plants), Stahlerzeugung und Geothermie angetrieben. Dabei betrifft die vorliegende Erfindung sowohl Stirnradgetriebe mit nur zwei Wellen, von denen eine zum Beispiel ein Großrad und die andere zum Beispiel ein Ritzel trägt, wie auch Stirnradgetriebe mit drei oder mehr Wellen, von denen insbesondere eine ein Großrad und die anderen jeweils ein Ritzel oder ein Zwischenrad tragen, wobei ein solches Zwischenrad arbeiten kann, um ein weiter entfernt vom Großrad angeordnetes Ritzel anzutreiben. Je mehr Ritzelwellen vorgesehen sind, umso mehr Verdichterstufen oder Verdichter können über das Stirnradgetriebe angetrieben werden, beispielsweise mittels eines einzigen Antriebs oder auch mit mehreren Antrieben.

Als Antrieb kommt beispielsweise wenigstens ein E-Motor und/oder eine Gasturbine oder Dampfturbine in Betracht. Prinzipiell erfolgt der Antrieb an der Welle des Großrades oder auch eines Zwischenrades, jedoch ist auch ein Antrieb an einer Welle eines Ritzels möglich.

Zur Reduzierung von Ventilationsverlusten und Strömungsverlusten weisen die Gehäuse von gattungsgemäßen Stirnradgetrieben ein inneres Gehäuse auf, auch Umhüllung genannt, welches die Zahnräder eng umhüllt. Die Umhüllung kann eine vollständige oder eine teilweise sein. Das Innengehäuse beziehungsweise die Umhüllung ist wiederum in einem Außengehäuse gelagert und wird von diesem umschlossen. Je nach Anzahl der Wellen umfassen das Innengehäuse und/oder das Außengehäuse eine oder mehrere horizontale Teilfugen. Es können auch Innengehäuse oder sogar Außengehäuse ohne horizontale Teilfugen vorgesehen sein. Bei Bedarf werden auch vertikale Teilfugen vorgesehen. WO 91/05965 A1 offenbart ein Stirnradgetriebe mit einem solchen Innengehäuse und einer Kühlmitteleinspritzung im Bereich des Verzahnungseingriffs.

Die Wellen sind in der Regel im Außengehäuse gelagert. Die Verzahnungen der Stirnräder werden geschmiert und/oder gekühlt, wofür entsprechende Schmierstoff- oder Schmiermitteleinspritzungen vorgesehen sein können.

Zur Verteilung und Abfuhr von solchem Schmiermittel- und/oder Kühlmittel können Öffnungen im Innengehäuse vorgesehen sein, über die das Schmiermittel- und/oder Kühlmittel in den Raum zwischen der Wand des Inngehäuses und der Wand des Außengehäuses strömt und dann in einen Sumpf im Außengehäuse abläuft. Ein Kühlmittelstrom kann auch über die Oberfläche der Innengehäusewand hinweg oder durch Kanäle innerhalb der Innengehäusewand geleitet werden, um Wärme abzuführen.

WO 2017/207215 A1 schlägt vor sich entlang einer die Stirnräder abdeckenden Mantelfläche des Innengehäuses erstreckende Kühlrohre mit Kühlmittelauslassöffnungen vorzusehen. Aus den Kühlmittelauslassöffnungen kann Kühlmittel auf die Mantelfläche strömen und diese kühlen. Ferner sind Axialöffnungen im Innengehäuse vorgesehen, die sich entlang des Umfangs des Großrads erstrecken und im Bereich der Verzahnung des Großrads angeordnet sind. Aus diesen Axialöffnungen tritt ein heißes Schmiermittelluftgemisch aus und strömt frei in den Raum zwischen der Seitenwand des Innengehäuses und der inneren Wandoberfläche des Außengehäuses.

Im Bereich der Mantelfläche axial außerhalb der Kühlrohre können radial über die Mantelfläche überstehende Blechelemente vorgesehen sein, die sich seitlich entlang der Mantelfläche erstreckende Kanäle in der Axialrichtung begrenzen. Aus in der Mantelfläche angeordneten Radialöffnungen strömt ebenfalls ein heißes Schmiermittelluftgemisch in die Kanäle, wobei die Kanäle von der Wand des Außengehäuses abgedeckt werden.

US 2013/0180803 A1 beschreibt ein Stirnradgetriebe mit einem Innengehäuse und einem Außengehäuse der gattungsgemäßen Art mit Ablenkblechen am Innengehäuse, um radial aus Drainageöffnungen ausströmendes Öl umzuleiten. DE 295 17 964 U1 beschreibt ein weiteres Stirnradgetriebe, bei welchem ein Ölsumpf aus dem Innengehäuse mit einer Pumpe abgepumpt wird. Das Innengehäuse umschließt die Zahnräder nicht eng, sondern im Innengehäuse sind in unmittelbarer Nähe der Zahnköpfe Auffangbleche für Öl vorgesehen, welche über mindestens einen Teil des Umfangs mit Durchtrittsöffnungen versehen sind. Zirkulierende beziehungsweise weggeschleuderte Öltröpfchen gelangen durch diese Durchtrittsöffnungen auf die Rückseite der Auffangbleche und von dort in den Ölsumpf. Die Durchtrittsöffnungen erstrecken sich bevorzugt tangential. Das Dokument DE 295 17 964 U1 offenbart ein Stirnradgetriebe mit wenigstens zwei Stirnrädern, deren Verzahnungen paarweise miteinander kämmen, wobei die Stirnräder jeweils einen radial äußeren Umfang und zwei voneinander abgewandte Axialseiten aufweisen und von einem Innengehäuse umschlossen werden, und wobei das Innengehäuse Radialöffnungen aufweist, durch welche das Schmiermittel zumindest mittelbar aus dem Innengehäuse ausströmen kann; wobei dass wenigstens eine Radialöffnungen von einem zwischen dem Innengehäuse und dem Außengehäuse angeordneten Abschirmelement überdeckt wird und wobei das Schmiermittel außerhalb des Innengehäuses vom Abschirmelement umgelenkt wird.

Weitere Stirnradgetriebe werden in DE 10 2015 221 234 A1 und US 2013/0025405 A1 offenbart.

Nachteilig bei den bekannten Ausführungsformen ist, dass das heiße aus den Axialöffnungen und Radialöffnungen ausströmende Schmiermittelluftgemisch unmittelbar gegen die Wand des Außengehäuses strömt und dadurch eine ungleichmäßige Aufheizung des Außengehäuses und starke, lokal begrenzte thermische Belastungen des Außengehäuses bewirkt.

Der vorliegenden Erfindung liegt daher die Aufgabe zugrunde, ein Stirnradgetriebe anzugeben, das die zuvor genannte ungünstige thermische Belastung des Außengehäuses vermeidet und dabei die Vorteile der engen Kapselung der Stirnräder mit dem Innengehäuse und die Abfuhr von Wärme aus dem Innengehäuse über ein Schmiermittelluftgemisch aus Axialöffnungen und/oder Radialöffnungen beibehält.

Die erfindungsgemäße Aufgabe wird durch ein Stirnradgetriebe mit den Merkmalen von Anspruch 1 gelöst. Die abhängigen Ansprüche beschreiben vorteilhafte und besonders zweckmäßige Ausgestaltungen der Erfindung.

Ein erfindungsgemäßes Stirnradgetriebe weist wenigstens zwei verzahnte, jeweils auf einer Welle angeordnete Stirnräder auf, deren Verzahnungen paarweise miteinander kämmen. Insbesondere sind drei oder mehr Stirnräder mit jeweils einer eigenen Welle vorgesehen.

Die Stirnräder weisen jeweils einen radial äußeren Umfang (oder Umfangsfläche) auf, in dem die Verzahnung angeordnet ist, sowie zwei voneinander abgewandte Axialseiten. Über dem größten Teil ihres radial äußeren Umfangs und über dem größten Teil ihrer voneinander abgewandten Axialseiten werden die Stirnräder von einem Innengehäuse umschlossen. Dabei umschließt das Innengehäuse die Stirnräder vergleichsweise eng, sodass die Wand des Innengehäuses der Kontur der Stirnräder folgt und in der Radialrichtung sowie bevorzugt auch in der Axialrichtung zwischen der Wand des Innengehäuses und der Außenkontur der Stirnräder ein Spalt verbleibt, der bevorzugt weniger als ein Zehntel, besonders bevorzugt weniger als ein Zwanzigstel des Durchmessers des jeweiligen Stirnrads beträgt.

Das Innengehäuse wird wiederum von einem separat zu diesem angeordneten Außengehäuse vollumfänglich umschlossen und ist bevorzugt im Außengehäuse gelagert, das bedeutet, das Außengehäuse trägt das Innengehäuse. Auch die Wellen sind bevorzugt im Außengehäuse gelagert. Somit ist das Innengehäuse bevorzugt zwischen der Wellenlagerung und vorteilhaft mit einem Axialabstand zu dieser, bezogen auf die Axialrichtung der Wellendrehachsen, und den Stirnrädern positioniert, wobei auf beiden Axialseiten der Abstand des Innengehäuses von den Stirnrädern in der Axialrichtung in der Regel kleiner als der genannte Axialabstand zu der Wellenlagerung ist.

Bevorzugt handelt es sich bei den Stirnrädern wenigstens um ein Großrad und wenigstens ein mit dem Großrad kämmendes Ritzel.

Gemäß einer Ausführungsform sind ein einziges Großrad und ein einziges Ritzel vorgesehen.

Gemäß einer anderen Ausführungsform sind wenigstens zwei Ritzel vorgesehen, die mit dem Großrad kämmen, beispielsweise direkt.

Gemäß einer besonderen Ausführungsform kämmt wenigstens ein Ritzel direkt mit dem Großrad und wenigstens ein anderes Ritzel kämmt über ein Zwischenrad mit dem Großrad.

Erfindungsgemäß sind die Stirnräder im Bereich ihrer Verzahnungen mit einem Schmiermittel beaufschlagt. Das Innengehäuse weist Axialöffnungen auf, die einer oder beiden Axialseiten wenigstens eines Stirnrads gegenüberstehen, und/oder das Innengehäuse weist Radialöffnungen auf, die dem radial äußeren Umfang wenigstens eines Stirnrads gegenüberstehen, wobei das Schmiermittel durch die Axialöffnungen und/oder Radialöffnungen zumindest mittelbar aus dem Innengehäuse ausströmen kann.

Die Beaufschlagung der Stirnräder im Bereich ihrer Verzahnungen mit einem Schmiermittel kann beispielsweise mittels einer Schmiermitteleinspritzung erfolgen, wobei die Einspritzung über Düsen mit Druck oder über Leitungen zumindest vergleichsweise drucklos oder drucklos erfolgen kann.

Das Einspritzen von Schmiermittel bevorzugt in die Zahneingriffsbereiche kann beispielsweise mit entsprechenden im oder am Innengehäuse vorgesehenen Düsen, insbesondere Flachstrahldüsen, vorgesehen sein, wobei für die Schmiermittelversorgung der Düsen bevorzugt Kanäle im Innengehäuse vorgesehen sind, insbesondere innerhalb der Innengehäusewand, beispielsweise in einer Mantelfläche und/oder in einem Seitenteil des Innengehäuses.

Erfindungsgemäß wird wenigstens eine oder werden mehrere oder alle Axialöffnungen und/oder Radialöffnungen von einem zwischen dem Innengehäuse und dem Außengehäuse angeordneten Abschirmelement überdeckt, wobei das Abschirmelement derart oder mit einem solchen Abstand zur jeweils abgedeckten Axialöffnung oder Radialöffnung angeordnet ist, dass aus der Axialöffnung oder Radialöffnung ausströmendes Schmiermittel außerhalb des Innengehäuses vom Abschirmelement umgelenkt wird.

Somit steht das Abschirmelement dem aus der Axialöffnung oder Radialöffnung austretenden heißen Schmiermittelstrom oder Schmiermittelluftstrom derart gegenüber, dass dieser Strom daran gehindert wird, unmittelbar gegen die innere Wandoberfläche des Außengehäuses zu strömen. Vielmehr wird der Strom vom Abschirmelement vollständig umgelenkt oder zumindest vom Abschirmelement derart verteilt, dass kein lokal stark begrenzter Temperatureintrag durch den Strom in das Außengehäuse erfolgt.

Gemäß der Erfindung wird das ausströmende Schmiermittel, beziehungsweise der Schmiermittelluftgemischstrom, mit einer der Öffnung zugeordneten Kühlmitteleinspritzung außerhalb des Innengehäuses umgelenkt, sodass es nicht unmittelbar gegen das gegenüberstehende Außengehäuse strömt. Die Kühlmitteleinspritzung kann hierfür einen mehr oder minder gebündelten Strahl eines Kühlmittels in das aus der Öffnung austretende Schmiermittel beziehungsweise das Schmiermittelluftgemisch insbesondere mittels einer Düse oder einer Brause einleiten, um die gewünschte Umlenkung zu erzielen. Zugleich wird vorteilhaft damit eine Kühlung des aus dem Innengehäuse austretenden Schmiermittels beziehungsweise Schmiermittelluftgemisches erreicht.

Insbesondere ist wenigstens ein Abschirmelement derart gegenüber der jeweils abgedeckten Axialöffnung oder Radialöffnung angeordnet, dass aus der Axialöffnung oder Radialöffnung ausströmendes Schmiermittel in Richtung entlang einer äußeren Oberfläche des Innengehäuses, das Innengehäuse mehr oder minder berührend umgelenkt wird. Das bedeutet, dass der umgelenkte Schmiermittelstrom (beziehungsweise Schmiermittelluftstrom) zumindest im Wesentlichen parallel zur äußeren Oberfläche des Innengehäuses strömt, entweder unmittelbar auf der äußeren Oberfläche oder mit Abstand zu dieser. Zusätzlich oder alternativ kann auch wenigstens ein Abschirmelement Öffnungen aufweisen und insbesondere als Lochblech ausgeführt sein. Dabei weisen die Öffnungen jeweils einen maximalen Strömungsquerschnitt von einem Zwanzigstel, Fünfzigstel oder Hundertstel des Strömungsquerschnitts der von dem jeweiligen Abschirmelement abgedeckten Axialöffnung oder Radialöffnung auf. Somit wird eine Verteilung des aus der Axialöffnung oder Radialöffnung austretenden Schmiermittels erreicht, sodass das aus der Axialöffnung oder Radialöffnung ausströmende Schmiermittel über einen vergleichsweise größeren Bereich des Außengehäuses verteilt wird, im Vergleich zu einer Ausführungsform ohne Abschirmelement.

Gemäß einer bevorzugten Ausführungsform weist wenigstens ein Abschirmelement eine Bogenform auf, insbesondere mit einer der Axialöffnung oder Radialöffnung zugewandten konkaven Seite. Ein solches Abschirmelement kann mit oder ohne Öffnungen ausgeführt sein. Wenn es mit Öffnungen ausgeführt ist, so wird hierdurch die Verteilung des Schmiermittelstroms begünstigt. Wenn es ohne Öffnungen ausgeführt ist, so wird die Umlenkung des Schmiermittels begünstigt und insbesondere ist ein Austritt aus Ablauföffnungen aus dem Abschirmelement in zwei entgegengesetzte Richtungen möglich. Natürlich kann das Abschirmelement derart angeordnet sein, dass Schmiermittel nur in eine Richtung, also aus einer Ablauföffnung austritt.

Gemäß einer Ausführungsform der Erfindung liegt wenigstens ein Abschirmelement mit wenigstens einem oder zwei seitlichen Enden seitlich zur Axialöffnung oder Radialöffnung an einer äußeren Oberfläche des Innengehäuses an. Damit wird ein Entweichen von Schmiermittel im Bereich dieser seitlichen Enden zwischen dem Abschirmelement und dem Innengehäuse vermieden. Ferner ist eine leichte Montage des Abschirmelements am Innengehäuse möglich.

Das Abschirmelement kann insbesondere auf zwei entgegengesetzten Seiten der Axialöffnung oder Radialöffnung an der äußeren Oberfläche des Innengehäuses anliegen. Damit wird eine zweiseitig offene Lasche erreicht. Beispielsweise kann hierfür die genannte Bogenform des Abschirmelements gewählt werden. Natürlich kommt auch eine andere Form, insbesondere eine abgekantete Form in Betracht.

Gemäß einer alternativen Ausführungsform liegt das Abschirmelement mit drei von vier seitlichen Enden seitlich zur Axialöffnung oder Radialöffnung an der äußeren Oberfläche des Innengehäuses an und ist insbesondere als tiefgezogene Kieme in einem Seitenteil des Innengehäuses ausgeführt. Damit wird der Schmiermittelstrom in genau eine Richtung umgelenkt.

Bei beiden Ausführungsformen ist es jedoch auch möglich, Öffnungen im Abschirmelement vorzusehen, sodass auch ein Entweichen von Schmiermittel in Richtung des Außengehäuses möglich ist.

Gemäß einer Ausführungsform der Erfindung weist das Innengehäuse eine Vielzahl von einzelnen Abschirmelementen auf, die für eine Vielzahl von Axialöffnungen und/oder Radialöffnungen vorgesehen sind, wobei die Abschirmelemente jeweils am Innengehäuse oder am Außengehäuse befestigt sind.

Ferner kann wenigstens ein Abschirmelement auch als geschlossener Ablaufkanal ausgeführt sein, der sich mit seiner Kanallängsachse, die in Umfangsrichtung vom Innengehäuse und einer Kanalwand vollständig umschlossen wird, entlang einer äußeren Oberfläche des Innengehäuses erstreckt. Ein solcher Ablaufkanal kann zum Beispiel mit seiner Längsachse in Umfangsrichtung eines Stirnrads ausgezogen sein. Zusätzlich oder alternativ erstreckt sich wenigstens ein Ablaufkanal mit seiner Längsachse vertikal. Andere Erstreckungen sind möglich.

Günstig ist, wenn wenigstens einige Axialöffnungen mit Abstand zueinander in Umfangsrichtung wenigstens eines Stirnrads entlang der Verzahnung des Stirnrads angeordnet sind, also radial in einem Bereich zwischen dem Fußkreisdurchmesser und dem Kopfkreisdurchmesser der Verzahnung. Die Abstände zwischen den Axialöffnungen können dabei unregelmäßig oder regelmäßig sein, je nachdem, wo ein Austritt von Schmiermittel aus dem Innengehäuse erwünscht ist.

Gemäß einem weiteren Aspekt der Erfindung ist eine Kühlmitteleinspritzung im Bereich der Axialöffnungen und/oder Radialöffnungen und/oder an den Abschirmelementen vorgesehen, mit welcher ein Kühlmittel in das aus der Axialöffnung oder Radialöffnung ausströmende Schmiermittel eingespritzt wird. Mit einer solchen Kühlmitteleinspritzung kann nicht nur der aus der Axialöffnung oder Radialöffnung austretende Schmiermittelstrom gekühlt werden, sondern es ist auch möglich, die Kühlmitteleinspritzung derart auszuführen, dass durch diese eine Verteilung und/oder Umlenkung des Schmiermittelstroms bewirkt wird.

Im Außengehäuse ist vorteilhaft ein Ölsumpf oder allgemein Schmiermittelsumpf vorgesehen, der aus den Lagern und/oder aus dem Innengehäuse austretendes Öl oder allgemein Schmiermittel aufnimmt. Das Innengehäuse ist bevorzugt frei von einem solchen Ölsumpf oder Schmiermittelsumpf.

Jede Welle eines Ritzels kann vorteilhaft ein oder zwei Verdichterlaufräder aufnehmen, um einen mehrstufigen Verdichter auszubilden. Insbesondere kommen bis zu fünf Ritzelwellen und 10 Verdichterstufen in Betracht.

Stirnraddurchmesser von mehr als einem Meter, beim Großrad gegebenenfalls von mehr als drei Meter sind möglich.

Übersetzungsverhältnisse zwischen dem Großrad und den Ritzeln von mehr als 10 oder mehr als 20, beispielsweise 24, kommen in Betracht.

Die Stirnräder können geradverzahnt, schrägverzahnt oder mit Pfeilverzahnung ausgebildet sein. Desweiteren kann, insbesondere auch bei schräger Verzahnung eine Kühlrille in der Umfangsrichtung in der Verzahnung ausgebildet sein.

Außerhalb einer Teilfuge gelagerte Wellen können als Steckwellen ausgeführt sein.

Das Stirnradgetriebe weist insbesondere nicht die Funktion einer Zahnradpumpe auf und dementsprechend kann das Stirnradgetriebe frei von einem Druckanschluss sein, an welchem durch die Zahnräder druckbeaufschlagtes und/oder gefördertes Druckmedium, insbesondere Öl anliegt.

Die Stirnräder können vollständig oberhalb eines Ölsumpfes im Außengehäuse angeordnet sein, demnach nicht in den Ölsumpf eintauchen oder allgemein frei von einem Eintauchen in einen Flüssigkeitsvorrat sein. Stattdessen kann insbesondere Schmiermedium von oben oder seitlich auf die Stirnräder gespritzt oder geleitet werden.

Auch eine Ausführungsform ohne Ölsumpf im Außengehäuse ist möglich.

Folgende Merkmale und Maßnahmen können ebenfalls zur Wirkungsgradverbesserung und zur Leistungsverbesserung eines erfindungsgemäßen Stirnradgetriebes beitragen, einzeln oder in Kombination, sind jedoch nicht zwingend:
An jeder Ritzelwelle ist die direkte Montage von bis zu zwei Laufrädern eines Verdichters oder dergleichen möglich. Die Laufräder können beispielsweise direkt mit einer Kegelverbindung, einem Flansch oder einer Hirth-Verbindung an der Ritzelwelle montiert sein. Die Laufräder sind dabei außerhalb des Außengehäuses angeordnet, jedoch können Teile der entsprechenden Strömungsmaschine in das Außengehäuse integriert werden, beispielsweise ein Spiralgehäuse für das Laufrad.

An einem freien Wellenende kann auch eine zusätzliche Pumpe zur Schmierölversorgung angeordnet sein, insbesondere auch über eine zusätzliche Getriebestufe zur Anpassung der Pumpendrehzahl.

Es sind auch weitere Ausgestaltungen möglich, welche über ein zusätzliches freies Wellenende auf der Großradwelle, einer Ritzelwelle oder einer Zwischenwelle verfügen, das heißt ein Ende ohne Verdichterlaufrad, wobei an diesem freien Wellenende weitere Antriebsmaschinen, Getriebe oder Arbeitsmaschinen angeordnet oder angekoppelt sein können.

Die Lagerung der Wellen kann bevorzugt über Gleitlager erfolgen, zum Beispiel Festsegmentlager oder Kippsegmentlager, welche zumindest teilweise auch als hydrostatische Lager ausgeführt sein können.

Beim erfindungsgemäßen Stirnradgetriebe können insbesondere sehr hohe Umfangsgeschwindigkeiten der Getriebeverzahnungen von bis zu 200 m/s oder mehr erreicht werden. Durch ausreichende Kühlung kann die Verzahnungstemperatur auf maximal 125° C eingestellt werden.

Für Wartungsarbeiten bleibt bei einem Innengehäuse mit horizontaler Teilfuge bevorzugt der untere Teil des Innengehäuses im Außengehäuse, das heißt nur der obere Teil des Innengehäuses wird abgehoben. Eine Inspektionsmöglichkeit im eingebauten Zustand wird vorteilhaft ferner vorgesehen, beispielsweise durch Öffnungen im Innengehäuse im Bereich der Verzahnungseingriffe.

Die Stirnräder sind bevorzugt fast vollständig vom Innengehäuse umschlossen, insbesondere über wenigstens annähernd 360° (z. B. wenigstens 330° oder wenigstens 340° oder wenigstens 350°), und nur im Bereich von jeweils zwei kämmenden Stirnrädern sind Öffnungen für Inspektionen vorgesehen.

Im Innengehäuse können Kühlkanäle vorgesehen sein, die ein Kühlmittel führen, um das Innengehäuse zu kühlen. Ein solcher Kühlkanal oder auch der genannten Ablaufkanal kann segmentiert ausgeführt sein. Somit können sich mehrere einzelne Kanäle für ein Stirnrad ergeben, die bevorzugt in Umfangsrichtung hintereinander angeordnet sind und kühlmittelleitend oder schmiermittelleitend miteinander verbunden sind.

Das Innengehäuse ist bevorzugt als Schweißkonstruktion ausgeführt. Zur besseren Positionierung während der Fertigung können die Blechteile bevorzugt über ein Nut-Feder-System positioniert und zueinander ausgerichtet werden. Hierdurch lässt sich eine aufwändige, nachgelagerte mechanische Bearbeitung, besonders im Bereich der Verzahnungsteile, vermeiden, da eine Formabweichung minimiert wird und exakt innerhalb der spezifizierten Konstruktionstoleranzen verbleibt.

Der Abstand zwischen den rotierenden Teilen und dem Inngehäuse und/oder Außengehäuse (Verzahnung, Wellen und/oder Druckkamm) kann auf 1 bis 10 mm begrenzt werden.

Die Kühlkanalsegmente oder Ablaufkanalsegmente können durch Verbindungen innerhalb der Teilfuge des Innengehäuses miteinander verbunden werden, wodurch ein Kühlmittelstrom, insbesondere Kühlölstrom, oder Schmiermittelstrom, insbesondere Schmiermittelluftgemischstrom, an der Teilfuge von einem Gehäuseteil in das andere Gehäuseteil übergeben werden kann.

Innerhalb des Innengehäuses und/oder in den Kühlkanälen und/oder in den Ablaufkanälen können Temperatursensoren angeordnet werden, um eine besonders bedarfsgerechte Regelung der Kühlmittelmenge zu ermöglichen. Ferner können auch für andere Sensoren Aussparungen und/oder Befestigungsmöglichkeiten besonders am Innengehäuse vorgesehen sein, zum Beispiel zur Erfassung einer Drehzahl, von Schwingungen, einer Beschleunigung, des Druckes oder zur Anordnung eines Drehgebers (Keyphasor).

Bei der Verwendung von Flachstrahldüsen werden vorteilhaft Düsen mit abgeflachten Seitenflächen verwendet. Hierdurch kann die Kontur in den Blechteilen des Innengehäuses bereits vorgefertigt werden. Während dem folgenden Schweißprozess bei der Montage des Innengehäuses ist damit keine aufwändige Positionierung und/oder Verdrehsicherung nötig. Andere nicht rotationssymmetrische Geometrien sind ebenfalls einsetzbar.

Das Einspritzen des Schmiermittels für die Verzahnung kann in den Eingriff und/oder den Ausgriff erfolgen. Bei einer Einspritzung sowohl in den Eingriff als auch in den Ausgriff können gleiche Schmiermittelmengen oder verschiedene Schmiermittelmengen vorgesehen sein. Damit kann eine optimale Schmierfilmdicke erreicht werden.

Die Montage eines Innengehäuseunterteils erfolgt bevorzugt über Laschen in der primären Teilfuge des Außengehäuses, bevorzugt über Laschen, welche in der Höhe einstellbar sind, beispielsweise mittels Einstellschrauben und/oder Einstellblechen. Um die notwendige Bearbeitung an der Außengehäuseteilfuge zu minimieren oder um im Retrofit-Fall ein neues Innengehäuse montieren zu können, sind die Laschen bevorzugt gekröpft ausgeführt, um eine gemeinsame Montage mit der Außengehäuseteilfuge zu ermöglichen.

Ein Innengehäuseoberteil wird bevorzugt mit einem Innengehäuseunterteil verschraubt.

Eine Einhausung für weitere Stirnräder, welche sich nicht auf der Höhe der primären Außengehäuseteilfuge befinden, kann über ein zweites Innengehäuse erfolgen, das bevorzugt in einer zweiten Außengehäuseteilfuge befestigt ist oder über eine zweite Teilfuge mit dem ersten Innengehäuse verschraubt ist.

Bevorzugt kann die Position des Unterteils des Innengehäuses, das in der primären Teilfuge des Außengehäuses gelagert ist, in der Axialrichtung eingestellt werden, beispielsweise mittels einer Verzahnung, mit Keilen und/oder mit Verstellschrauben.

Seitenwände des Innengehäuses können im Bereich der Öffnungen für die Wellen eine ringförmige Abschöpfkante aufweisen, welche aus den Öffnungen austretendes Schmiermittel, insbesondere Öl aus den Gleitlagern, oder aus den Ventilationsschlitzen des Innengehäuses austretendes Medium vor ungewollter Rückführung durch die Sogwirkung der Verzahnungsteile abschirmt.

Die Seitenwände des Innengehäuses können weitere Versteifungsbleche, welche gleichzeitig eine Ablenkung des im Raum zwischen Außengehäuse und Innengehäuse entstehenden Spritzöls bewirken, aufweisen.

Wenn zur Abfuhr von Wärme Kühlkanäle am Innengehäuse vorgesehen sind, können strömungsgeschwindigkeitserhöhende Einrichtungen integriert werden, die zu einer bevorzugt turbulenten Strömung des Kühlmittels im Kühlkanal, bevorzugt Öl, führt. Hierfür sind beispielsweise Einbauten im Kühlkanal möglich, welche zum einen die vom Kühlmittel überströmte Oberfläche des Kühlkanals vergrößern und zum anderen die Strömungsgeschwindigkeit des Kühlmittels im Kanal temporär erhöhen. Beispielsweise können eingebaute Bleche und/oder querschnittsbeschränkende Bohrungen vorgesehen sein, und/oder auch eingelegte wabenförmige Strukturen und/oder Materialien zur Verbesserung des Wärmeübergangskoeffizienten, zum Beispiel aus Kupfer, Aluminium, Kupferlegierungen oder Aluminiumlegierungen. Solche strömungsgeschwindigkeitserhöhende Einrichtungen sind auch in den Ablaufkanälen möglich.

Der Ein- und/oder Austritt des Kühlmittels in die Kühlkanäle kann drehrichtungsabhängig gewählt werden, um eine optimale Kühlwirkung zu erreichen.

In der Teilfuge des Innengehäuses können Öffnungen, Rohrleitungen und/oder Schläuche vorgesehen sein, die eine strömungsleitende Verbindung zwischen wenigstens einem Kühlkanal im oberen Gehäuseteil und wenigstens einem Kühlkanal im unteren Gehäuseteil des Innengehäuses herstellen. Entsprechendes gilt für eine strömungsleitende Verbindung zwischen einem Ablaufkanal im oberen Gehäuseteil und einem Ablaufkanal im unteren Gehäuseteil.

Wenn mehrere Kühlkanäle in Axialrichtung nebeneinander vorgesehen sind, so können diese vollständig voneinander getrennt sein. Alternativ sind Durchbrüche in axialer Richtung vorgesehen, welche die Kanäle miteinander verbinden. Auch entsprechendes gilt für die Ablaufkanäle.

Kühlkanäle für das Großrad oder eines Zwischenrades können getrennt von Kühlkanälen der Ritzel vorgesehen sein oder mit diesen verbunden werden.

In den Kanälen können zusätzliche Einbauten zur Erhöhung der Steifigkeit und der genannten Erzielung von turbulenten Strömungen vorgesehen sein.

Die Strömung in den Kühlkanälen kann am Eintritt und/oder am Austritt gedrosselt werden. Die Abfuhr des Kühlmediums erfolgt idealerweise in einen Ölsumpf im Außengehäuse oder in eine Ölauffangwanne.

Bei einer Ausführungsform mit geschlossenen Kühlkanälen ist es nicht erforderlich, dass das Kühlmittel und das Schmiermittel identisch beziehungsweise mischbar sind. Bei einer solchen Ausführungsform kann das Kühlmittel geschlossen in die Kühlmittelkanäle ein- und ausgeleitet werden. Als Kühlmittel wären neben Öl zum Beispiel auch Wasser, Glykol oder andere flüssige oder gasförmige Stoffe möglich.

Vorteilhaft bei der Verwendung von getrenntem Kühl- und Schmiermittelkreisläufen ist die Verwendung unterschiedlicher Reinheitsklassen des Mittels, beispielsweise des Öls. So braucht das Kühlmittel nicht ständig gefiltert werden, was sich positiv auf das Filtersystem, insbesondere Ölfiltersystem, hinsichtlich der notwendigen Dimensionierung auswirkt.

Auch kann bei der Verwendung von getrennten Schmiermittel- und Kühlmittelkreisläufen die Ausführung mit unterschiedlichen Temperaturniveaus der beiden Medien vorteilhaft bezogen auf den Wärmeaustausch beziehungsweise das Schmierverhalten der Medien sein.

Die Radialöffnungen im Innengehäuse sind bevorzugt in einer Mantelfläche des Innengehäuses vorgesehen, welche der Kontur des Kopfkreises des entsprechenden Stirnrads, insbesondere eines Großrads, Zwischenrads oder Ritzels folgt. Bevorzugt können die Radialöffnungen im Bereich der axialseitlichen Enden der Mantelfläche angeordnet sein und axial außen von einem über die Mantelfläche radial überstehenden Seitenteil des Innengehäuses begrenzt oder abgeschirmt sein.

Die Abschirmelemente können einteilig mit dem Innengehäuse oder dem Außengehäuse ausgeführt sein, insbesondere stoffschlüssig mit diesen verbunden sein. Der Stoffschluss kann durch einteilige Herstellung oder durch Verschweißen oder Verlöten erreicht werden, auch Verkleben kommt in Betracht. Eine alternative Befestigung ist durch Schrauben, Nieten oder Stecken und dergleichen möglich. Generell kommt auch jede Art von Formschluss in Betracht. Die Abschirmelemente können aus demselben Werkstoff wie das Innengehäuse und/oder das Außengehäuse ausgeführt sein, jedoch kommt auch eine Ausführungsform mit einem anderen Werkstoff als jenem, aus dem das Innengehäuse und/oder das Außengehäuse ausgeführt ist, in Betracht.

Die Abschirmelemente können durch Umkanten oder Tiefziehen von Material des Innengehäuses und/oder des Außengehäuses hergestellt werden.

Die Abschirmelemente können jeweils einteilig oder mehrteilig ausgeführt sein, insbesondere bei asymmetrischen Geometrien ist die Mehrteiligkeit leichter technisch umsetzbar.

Die Abschirmelemente müssen nicht auf beiden axialen Seiten des Innengehäuses gleich verteilt ausgeführt sein. Je nach Art der Verzahnung können diese zum Beispiel nur auf der Druckseite oder nur auf der Saugseite der Verzahnung angeordnet sein oder die Verteilung, insbesondere die Abstände, auf beiden Seiten kann/können verschieden sein.

Auf beiden Axialseiten des Innengehäuses angeordnete Abschirmelemente können einander überdeckend oder zueinander versetzt angeordnet sein.

Die Axialöffnungen oder Radialöffnungen können symmetrische oder asymmetrische Formen aufweisen. Entsprechendes gilt für die Abschirmelemente.

Die Axialöffnungen oder Radialöffnungen können auch bogenförmig ausgeführt sein. Insbesondere kommen jedoch dreieckige, viereckige, polygonförmige, kreisrunde oder elliptische Öffnungen in Betracht.

Die Abschirmelemente können in mehreren Raumrichtungen gebogen und/oder gekantet ausgeführt sein.

Die Abschirmelemente können derart ausgeführt sein, dass das mit ihnen umgelenkte Schmiermittelluftgemisch in wenigstens zwei verschiedene Ausströmrichtungen über eine oder mehrere Ablauföffnungen abgeleitet wird.

Insbesondere bei zwei einander gegenüberliegenden Axialöffnungen im Innengehäuse im Bereich des Verzahnungseingriffs kann ein Abschirmelement auf der Saugseite zur Kühlluftzufuhr in den Verzahnungseingriff verwendet werden und das andere Abschirmelement auf der Druckseite zur Ableitung des Schmiermittelluftgemischs aus dem Verzahnungseingriff.

Die Kühlkanäle oder Ablaufkanäle können Anschlusseinrichtungen, wie beispielsweise Flansche, Gewinde und dergleichen, aufweisen, welche zum Anschluss zusätzlicher Rohrleitungen, Schläuche oder Schächte ausgeführt sind. Über diese Systeme ist es möglich das in den Kanälen strömende Medium zielgerichtet in Ölauffangtanks, Kühltanks, Schmiermittelsysteme oder Kühlsysteme zurückzuführen.

Optional kann wenigstens eine Absaugpumpe an wenigstens einen Ablaufkanal und/oder Kühlkanal angeschlossen werden, welcher ein schnelleres Abführen des im Kanal strömenden Mediums bewirkt.

Axialöffnungen können insbesondere im Seitenteil des Innengehäuses im Bereich der kämmenden Verzahnungsstelle vorhanden sein. Hier tritt besonders heißes Schmiermittel aus dem Innengehäuse aus.

Eine oder mehrere Axialöffnungen können asymmetrisch zur Gehäuseteilfuge, insbesondere horizontalen Gehäuseteilfuge, des Innengehäuses angeordnet sein.

Die Abschirmelemente können sich mit ihrer dem Seitenteil zugewandten Oberfläche schräg oder parallel zum Seitenteil, in dem eine entsprechende durch das Abschirmelement abgedeckte Axialöffnung vorgesehen ist, erstrecken.

Insbesondere wenn die Abschirmelemente eine gebogene, beispielsweise konkave Fläche aufweisen, auf die das aus der Axialöffnung oder Radialöffnung austretende Schmiermittel auftrifft, wird eine besonders gute Zerstreuung erreicht.

Wenn das Abschirmelement mit Öffnungen, insbesondere als Lochblech oder sogar als Gitter oder Sieb, ausgeführt ist, so kann es die Axialöffnung oder Radialöffnung unmittelbar überdecken, weil damit eine Umlenkung des aus der Axialöffnung oder Radialöffnung austretenden Schmiermittels erfolgt.

Anstelle eines Siebs oder Lochblechs kann auch eine schwammartige Struktur vorgesehen sein.

Die Erfindung soll nachfolgend anhand von Ausführungsbeispielen und den Figuren exemplarisch beschrieben werden.

Es zeigen:
- Fig. 1a-1d: schematische Darstellungen von erfindungsgemäß ausgeführten Stirnradgetrieben;
- Figur 2: eine Draufsicht schräg von oben auf ein erfindungsgemäß ausgeführtes Stirnradgetriebe in teilweiser Schnittansicht;
- Figur 3: eine Ansicht eines erfindungsgemäß ausgeführten Innengehäuses eines Stirnradgetriebes;
- Figur 4: eine mögliche verstellbare Lagerung des Innengehäuses im Außengehäuse;
- Figur 5: schematisch mögliche Inspektionsöffnungen im Innengehäuse;
- Figur 6: eine schräge Draufsicht auf ein Innengehäuse mit Axialöffnungen und Radialöffnungen;
- Figur 7: eine axiale Draufsicht auf ein Innengehäuse mit ungleichmäßig verteilt angeordneten Axialöffnungen;
- Figur 8: eine radiale Draufsicht auf ein Innengehäuse mit ungleichmäßig verteilten Radialöffnungen;
- Figur 9: eine schräge Draufsicht auf ein Innengehäuse mit erfindungsgemäß überdeckten Axialöffnungen;
- Figur 10: eine vergrößerte Schnittdarstellung durch die abgedeckten Axialöffnungen aus der Figur 9;
- Figur 11: eine Ausführungsform gemäß den Figuren 9 und 10 jedoch mit nur an zwei seitlichen Enden anliegenden Abschirmelementen;
- Figur 12: eine schematische Darstellung einer Befestigung eines Abschirmelements am Innengehäuse;
- Figur 13: eine schematische Darstellung einer Befestigung des Abschirmelements am Außengehäuse;
- Figur 14: ein Abschirmelement mit Öffnungen;
- Figur 15: schematisch eine Darstellung mit Kühlmitteleinspritzungen an den Abschirmelementen;
- Figur 16: eine Ausführungsform mit Abschirmelementen in Form von Ablaufkanälen in einer axialen Draufsicht auf ein Innengehäuse;
- Figur 17: eine Ausführungsform mit Ablaufkanälen für die Axialöffnungen und Radialöffnungen;
- Figur 18: einen Querschnitt durch die Ausführungsform gemäß der Figur 17;
- Figur 19: einen weiteren Querschnitt durch die Ausführungsform gemäß der Figur 17;
- Fig. 20a-c: ein weiteres Ausführungsbeispiel für überdeckte Axialöffnungen in verschiedenen Ansichten;
- Fig. 21a-c: ein weiteres Ausführungsbeispiel für überdeckte Axialöffnungen in verschiedenen Ansichten;
- Fig. 22a-c: ein weiteres Ausführungsbeispiel für überdeckte Axialöffnungen in verschiedenen Ansichten;
- Fig. 23a-b: ein Ausführungsbeispiel für die Überdeckung von Axialöffnungen;
- Figur 24: ein weiteres Ausführungsbeispiel für die Überdeckung von Axialöffnungen;
- Figur 25: eine Schnittansicht eines Ausführungsbeispiels für die überdeckte Axialöffnung;
- Figur 26: eine Schnittansicht eines weiteren Ausführungsbeispiels für überdeckte Axialöffnungen.

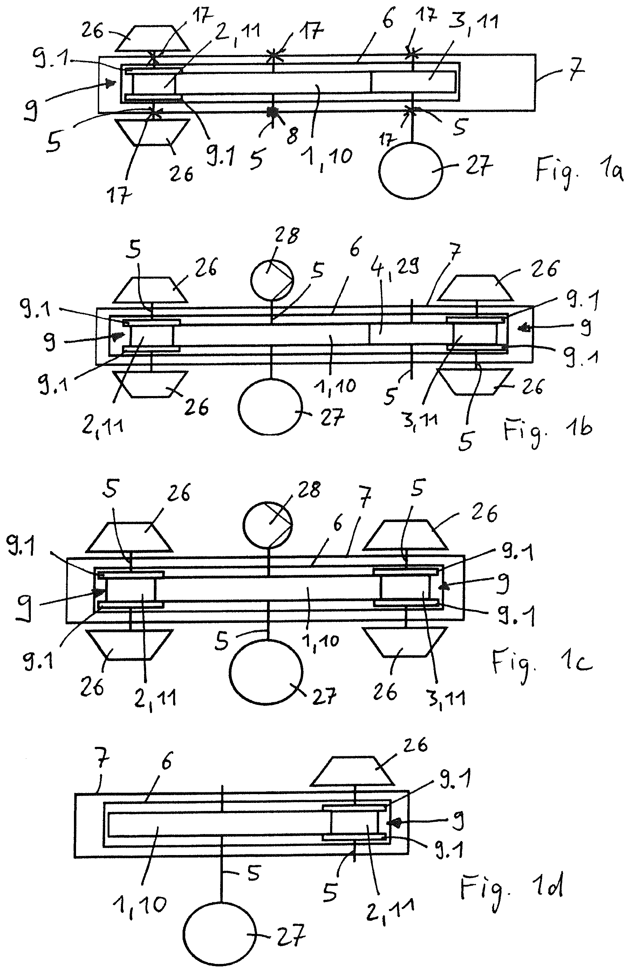

Die in den Figuren 1a bis 1b gezeigten Stirnradgetriebe unterscheiden sich durch die Anordnung von Laufrädern beziehungsweise Pumpen und die Anzahl der Stirnräder sowie die entsprechende Anzahl der Wellen. Diese Ausführungsbeispiele sind nicht abschließend und weitere Anordnungen sind möglich.

Gemäß der Figur 1a umfasst das Stirnradgetriebe drei Stirnräder 1, 2, 3, wobei das Stirnrad 1 als Großrad 10 ausgeführt ist und die Stirnräder 2, 3 jeweils als Ritzel 11 ausgeführt sind. Die Ritzel 11 sind bezogen auf das Großrad 10 diametral zueinander angeordnet und kämmen mit dem Großrad 10. Insbesondere sind alle Wellen 5 der Stirnräder 1, 2, 3 in einer gemeinsamen Teilfuge des Außengehäuses 7 gelagert.

Auf der Welle 5 des Stirnrads 2 sind zwei Laufräder 26 eines Verdichters positioniert, die Welle 5 des Stirnrads 3 wird von einem externen Antrieb 27 angetrieben. Somit folgt der Antriebsleistungsfluss vom Antrieb 27 über das Stirnrad 3 auf das Stirnrad 1, anschließend zum Stirnrad 2 und zu den Laufrädern 26.

Die Stirnräder 1, 2, 3 sind gemeinsam in einem Innengehäuse 6 positioniert und werden von diesem eng umschlossen. Das Innengehäuse 6 ist innerhalb eines Außengehäuses 7 angeordnet und wird von diesem getragen.

Die Wellen 5 sind im Außengehäuse 7 gelagert. Insbesondere ist die Welle 5 des Stirnrads 1 mit einem schematisch dargestellten Radiallager 17 und einem Axial-Radiallager 8 im Außengehäuse 7 gelagert, wohingegen die Welle 5 des Stirnrads 2 frei von Axiallagern ist und nur über Radiallager 17 im Außengehäuse 7 gelagert ist. Axialkräfte, die auf das Stirnrad 2 wirken, werden über eine Druckkammlagerung 9 mit zwei Druckkämmen 9.1, die sich in der Axialrichtung beidseitig am Stirnrad 1 abstützen, auf das Stirnrad 1 übertragen und von dessen im Außengehäuse 7 axial gelagerter Welle über das Axial-Radiallager 8 auf das Außengehäuse 7 abgeführt.

Das Stirnrad 3 kann eine Axiallagerung im Außengehäuse 7 neben einer Radiallagerung aufweisen. Gemäß einer Ausführungsform können Axialkräfte jedoch zusätzlich oder alternativ vom Antrieb 27 aufgenommen werden.

Die Druckkammlagerung 9, hier mit den beiden Druckkämmen 9.1, innerhalb des Innengehäuses 6 angeordnet und wird ebenfalls vom Innengehäuse 6 eng umschlossen.

Die Ausgestaltung gemäß der Figur 1b entspricht jener der Figur 1a mit dem Unterschied, dass der Antrieb 27 auf der Welle 5 des Großrads 10 vorgesehen ist und das Stirnrad 2 über seine Welle 5 zwei Laufräder 26 des Verdichters oder mehrerer Verdichter antreibt. Ferner ist auf der Welle 5 des Großrads 10 eine Pumpe 28, insbesondere Schmiermittelpumpe und/oder Kühlmittelpumpe, angeordnet.

Im Unterschied zur Figur 1a steht das Stirnrad 3 nicht in unmittelbarer Triebverbindung mit dem Stirnrad 1, sondern es ist ein viertes Stirnrad 4 vorgesehen, das als Zwischenrad 29 ausgeführt ist und mit dem Stirnrad 1 und dem Stirnrad 3 kämmt. Dies ist jedoch nicht zwingend, wie zum Beispiel aus der Figur 1c ersichtlich ist.

Zur Ableitung von Axialkräften ist bei der in der Figur 1b gezeigten Ausführungsform auch das Stirnrad 3 über eine Druckkammlagerung 9 mit zwei Druckkämmen 9.1 in der Axialrichtung auf dem benachbarten Stirnrad 4 gelagert, hier dem Zwischenrad 29, über welches das Stirnrad 3, das als Ritzel 11 ausgeführt ist, vom Stirnrad 1, das als Großrad 10 ausgeführt ist, angetrieben wird. Alternativ könnte das Stirnrad 3 wiederum unmittelbar mit dem Stirnrad 1 kämmen und sich über die Druckkammlagerung 9 am Stirnrad 1 abstützten, siehe die Figur 1c.

Das Stirnrad 4 weist ebenfalls eine Welle 5 auf, die bevorzugt über Radiallager und Axiallager beziehungsweise ein Radiallager und ein Axial-Radiallager im Außengehäuse 7 gelagert ist (nicht dargestellt). Die Ritzel 11 hingegen können wiederum frei von Axiallagerungen im Außengehäuse 7 sein.

Das Innengehäuse 6 umschließt alle Stirnräder 1, 2, 3, 4 und die beiden Druckkammlagerungen 9.

Die Ausgestaltung gemäß der Figur 1c entspricht jener der Figur 1b, nur das hier auf das Zwischenrad 29 verzichtet wird und, wie dargelegt, das Stirnrad 3 über die Druckkammlagerung 9 am Stirnrad 1 abgestützt ist. Im Übrigen wird auf die Beschreibung zur Figur 1b verwiesen.

Bei der Ausführungsform gemäß der Figur 1d sind nur zwei Stirnräder 1, 2 vorgesehen, von denen das Stirnrad 1 als Großrad 10 ausgeführt ist und das Stirnrad 2 als Ritzel 11 ausgeführt ist. Das Großrad 10 wird vom Antrieb 27 über die Welle 5 angetrieben und treibt das Ritzel 11 und über dessen Welle 5 das Laufrad 26 an. Das Ritzel 11 ist über die Druckkammlagerung 9 mit den beiden Druckkämmen 9.1 axial gelagert und kommt ohne Axiallagerung im Außengehäuse 7 aus. Die Welle 5 des Großrads 10 ist im Außengehäuse 7 axial gelagert und radial gelagert. Das Innengehäuse 6 umschließt die beiden Stirnräder 1, 2 und die Druckkammlagerung 9.

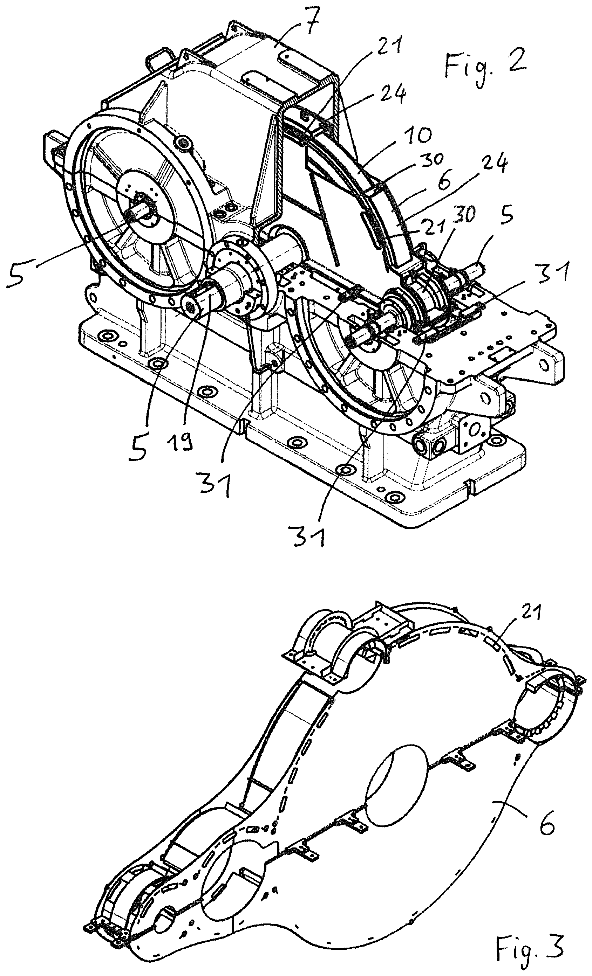

**In** der Figur 2 ist ein erfindungsgemäß ausgeführtes Stirnradgetriebe gezeigt, umfassend drei Wellen 5, von denen die mittlere das Großrad 10 trägt und die beiden äußeren, welche die mittlere Welle 5 zwischen sich einschließen, jeweils ein Ritzel tragen, das in der Darstellung nicht ersichtlich ist, weil es innerhalb des Innengehäuses 6 angeordnet ist. Die Ausschnitte im Außengehäuse 7 und im Innengehäuse 6 dienen lediglich der Veranschaulichung verschiedener Merkmale und sind in der Praxis nicht vorhanden. Insbesondere erkennt man, dass das Innengehäuse 6 im Bereich des Großrads 10 eine Mantelfläche 30 aufweist, welche der Verzahnung beziehungsweise dem radial äußeren Durchmesser des Großrads 10 radial gegenübersteht, mit einem vergleichsweise kleinen Radialspalt. Entsprechend sind Mantelflächen 30 des Innengehäuses 6 vorgesehen, die der radial äußeren Oberfläche der Ritzel eng gegenüberstehen und die Ritzel radial überdecken. **In** der Figur 2 ist nur eine Mantelfläche 30 ersichtlich.

Bei der Ausgestaltung gemäß der Figur 2 ist auf die Mantelfläche 30 für das Großrad 10 ein Kühlmittelkanal 24 aufgesetzt, um Wärme aktiv mit einem Kühlmittel abzuleiten.

Aus der Figur 2 ist die Lagerung des Innengehäuses 6 über Laschen 31 in der Teilfuge des Außengehäuses 7 ersichtlich. Dies stellt ein bevorzugtes Lagerkonzept dar. Dabei ist insbesondere die Position des Innengehäuses 6 in der Axialrichtung, das heißt in Richtung der Wellendrehachsen 19 der Wellen 5, verstellbar.

In der Figur 3 ist exemplarisch ein Innengehäuse 6 gezeigt, das fünf Wellen (nicht dargestellt) aufnehmen kann, nämlich vergleichsweise zentral die Welle eines Großrads (nicht dargestellt), daneben die Welle eines Ritzels (nicht dargestellt) und die Welle eines Zwischenrads (nicht dargestellt), jenseits des Zwischenrads die Welle eines weiteren Ritzels (nicht dargestellt) und oberhalb des Großrads die Welle eines weiteren Ritzels (nicht dargestellt). Ferner sind Axialöffnungen 21 entlang des äußeren Umfangs der oberen Gehäusehälfte des Innengehäuses 6 erkennbar, über die heißes Schmiermittel, insbesondere Öl, aus dem Bereich der Verzahnungen abgeleitet werden kann. Die Axialöffnungen 21 werden auch als Ventilationsöffnungen bezeichnet.

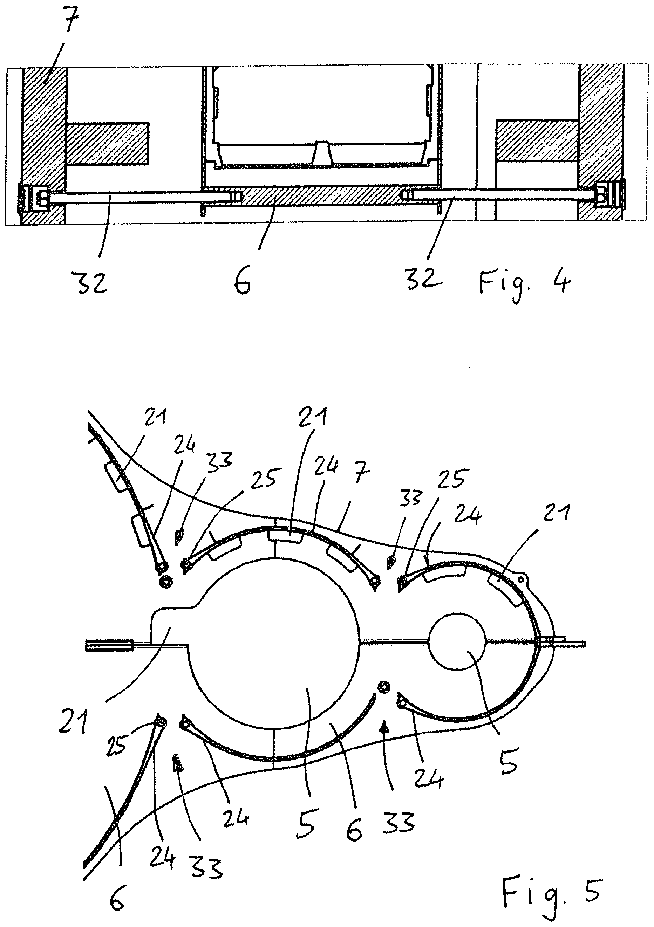

Die Figur 4 zeigt eine Einrichtung zur Einstellung der Axialposition des Innengehäuses 6 relativ zum Außengehäuse 7. Über Stellschrauben 32 kann das Innengehäuse 6 innerhalb des Außengehäuses 7 in der Axialrichtung verschoben werden.

Die Ansicht der Figur 5 dient besonders der Darstellung von Inspektionsöffnungen 33 im Innengehäuse 6 im Bereich der Zahneingriffe der hier nicht dargestellten Stirnräder. Im Bereich des nicht näher gezeigten Großrads, des Zwischenrads und des Ritzels sind wiederum Axialöffnungen 21, auch Ventilationsöffnungen genannt, ersichtlich, die jeweils entlang des äußeren Umfangs im Bereich zwischen Fußkreis und Kopfkreis der Verzahnungen angeordnet sind. Eine zusätzliche vergleichsweise große Axialöffnung 21 ist im Bereich der Verzahnung zwischen dem hier nicht dargestellten Großrad und dem Zwischenrad gezeigt. Entlang des äußeren Umfangs um die einzelnen Stirnräder sind wiederum Kühlmittelkanäle 24 im Innengehäuse vorgesehen. Diese Kühlmittelkanäle 24 könnten auch als Schmiermittelkanäle bezeichnet werden, wenn die Schmierwirkung im Vordergrund steht. Diese Kühlmittel- oder Schmiermittelkanäle 24 können an ihren Enden im Bereich der Verzahnungseingriffe Düsen 25 aufweisen, um Kühlmittel und/oder Schmiermittel in den Bereich der Verzahnung einzuspritzen.

Im gezeigten Ausführungsbeispiel ist das Innengehäuse 6 zweiteilig ausgeführt und, wie zuvor, entlang einer horizontalen Teilfuge geteilt.

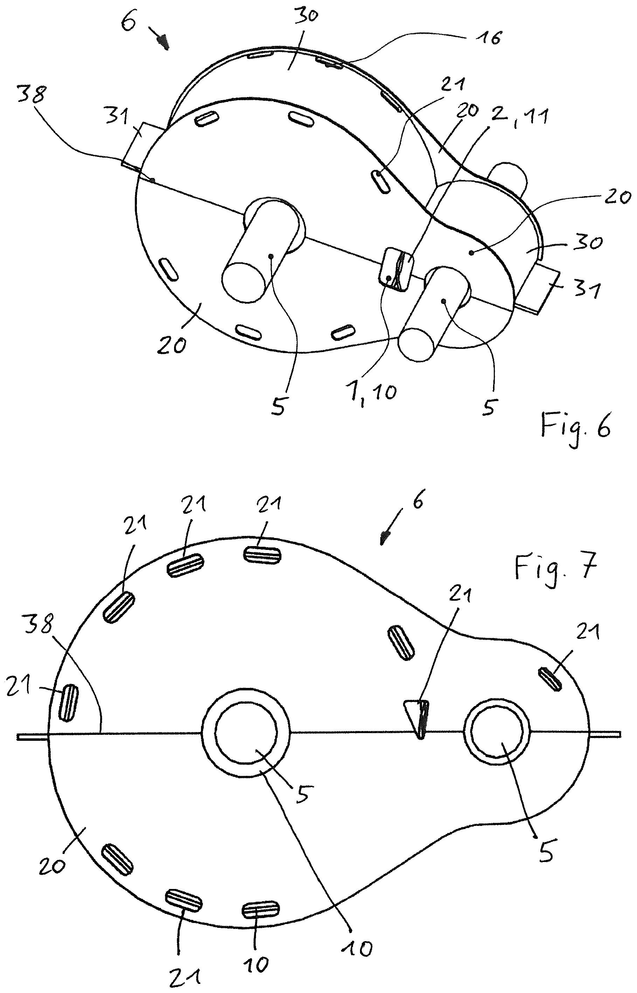

In der Figur 6 ist nochmals ein Innengehäuse 6 mit zwei Stirnrädern 1, 2 gezeigt, bei welchem die vorliegende Erfindung anwendbar ist. Das Stirnrad 1 ist als Großrad 10 ausgeführt, das Stirnrad 2 als Ritzel 11. Beide Stirnräder 1, 2 sind jeweils auf Wellen 5 gelagert, die aus Seitenteilen 20 des Innengehäuses 6 herausragen. Die Seitenteile 20 sind vorteilhaft eben ausgeführt und erstrecken sich in der Radialrichtung über die Mantelflächen 30 des Innengehäuses 6 hinaus. Unmittelbar neben den Seitenteilen 20 sind zumindest in der Mantelfläche 30 des Großrads 10 Radialöffnungen 16 vorgesehen, über die heißes Schmiermittel beziehungsweise ein Schmiermittelluftgemisch aus dem Innengehäuse 6 ausströmen kann. In den Seitenteilen 20 sind im Bereich der Verzahnung des Großrads 10 Axialöffnungen 21 für denselben Zweck angeordnet. Die Axialöffnungen 21 erstrecken sich demgemäß entlang des Umfangs im Bereich der Verzahnung des Großrads 10 mit Abstand zueinander in der Umfangsrichtung. Im gezeigten Ausführungsbeispiel sind die Abstände in der Umfangsrichtung zwischen den Axialöffnungen 21 identisch und die Abstände in Umfangsrichtung zwischen den Radialöffnungen 16 sind identisch. Dies ist jedoch nicht zwingend. Im gezeigten Ausführungsbeispiel unterscheiden sich die Abstände in der Umfangsrichtung zwischen den Radialöffnungen 16 von den Abständen in der Umfangsrichtung zwischen den Axialöffnungen 21. Auch dies könnte anders ausgeführt sein.

Das zuvor Dargestellte bezieht sich auf jeweils eine obere beziehungsweise untere Hälfte des Innengehäuses 6, das entlang der horizontalen Teilfuge 38 zusammengefügt ist.

Wie man sieht, ist jedes Seitenteil 20 oberhalb und unterhalb der Teilfuge 38 einstückig ausgeführt. Dies ist jedoch ebenfalls nicht zwingend.

In der Figur 7 ist ein Ausführungsbeispiel dargestellt, bei welchem der Abstand zwischen den Axialöffnungen 21 in dem Oberteil des Innengehäuses 6 ungleichmäßig ist. Ferner ist eine zusätzliche Axialöffnung 21 im Bereich der Teilfuge 38 asymmetrisch zur Teilfuge 38 angeordnet und insbesondere asymmetrisch zu einer radial zur Welle 5 des Großrads 10 verlaufenden Symmetrielinie ausgeführt.

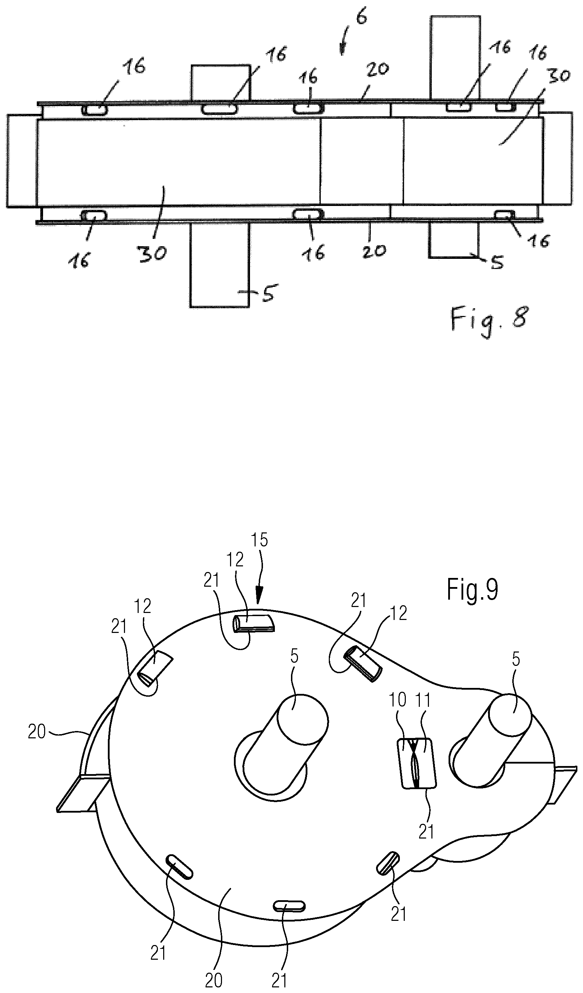

In der Figur 8 ist ein Ausführungsbeispiel für Radialöffnungen 16 im Innengehäuse 6 gezeigt, wobei die Anordnung der Radialöffnungen 16 im Bereich des einen Seitenteils 20 anders als jene im Bereich des anderen Seitenteils 20 ist.

Die vorliegende Erfindung kann sowohl bei solchen Innengehäusen 6, wie sie in den Figuren 6 bis 8 dargestellt sind, jedoch auch bei anderen Anordnungen von Axialöffnungen 21 und Radialöffnungen 16 angewendet werden.

In der Figur 9 ist die Ausgestaltung gemäß der Figur 6 mit Abschirmelementen 12 gemäß einem vorteilhaften Ausführungsbeispiel der Erfindung dargestellt. Dabei sind nur die Axialöffnungen 21 im Oberteil des Innengehäuses 6 mit Abschirmelementen 12 abgedeckt. Dies ist jedoch nicht zwingend, ebenso könnten auch Axialöffnungen 21 im Unterteil abgedeckt sein. Ferner sind alle Axialöffnungen 21 im Oberteil abgedeckt, auch hier könnte nur ein Teil der Axialöffnungen 21 abgedeckt sein. Die vergleichsweise große zusätzliche Axialöffnung 21 im Bereich des Verzahnungseingriffs zwischen dem Großrad 10 und dem Ritzel 11 ist nicht abgedeckt. Auch hier könnte eine entsprechende Abdeckung durch ein Abschirmelement 12 vorgesehen sein.

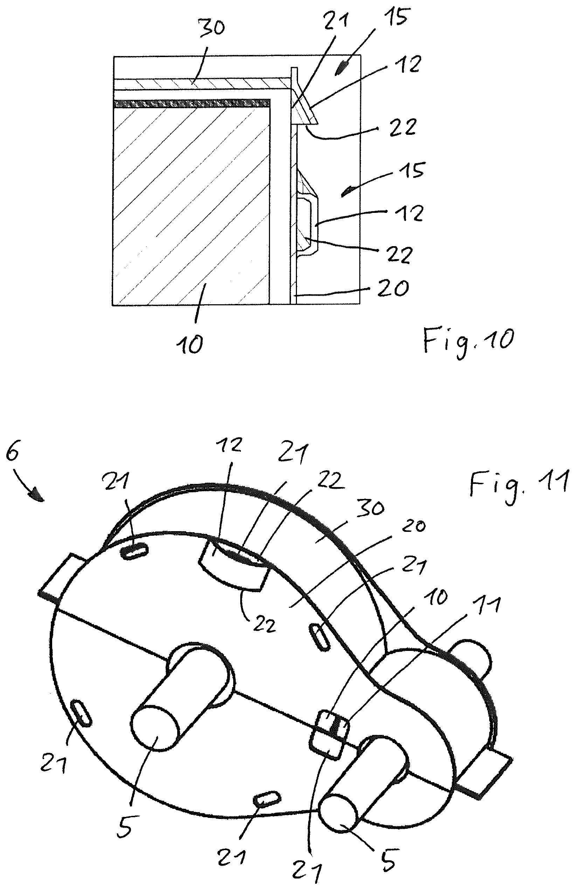

Im gezeigten Ausführungsbeispiel sind die Abschirmelemente 12 nach Art von Kiemen 15 ausgeführt. Dies erkennt man nochmals besonders in der vergrößerten Darstellung aus der Figur 10. Beispielsweise sind die Abschirmelemente 12 durch Tiefziehen der Seitenteile 20 hergestellt.

Im Einzelnen sind die Abschirmelemente 12, die im Wesentlichen eine rechteckige Form aufweisen, mit drei seitlichen Enden an der äußeren Oberfläche des Innengehäuses 6 angeschlossen, sodass nur im Bereich des vierten seitlichen Endes eine Ablauföffnung 22 verbleibt. Entlang des weiteren Umfangs der Axialöffnungen ist hingegen eine Abdichtung zwischen den Abschirmelementen 12 und dem Seitenteil 20 vorgesehen beziehungsweise sind dort die Abschirmelemente 12 einteilig mit den Seitenteilen 20 ausgeführt. Entsprechendes kann bei Abschirmelementen 12 von Radialöffnungen 16 vorgesehen sein.

Durch die Anordnung der Abschirmelemente 12 kann aus den Axialöffnungen 21 austretendes Schmiermittel nicht mehr unmittelbar gegen das axial gegenüberstehende Außengehäuse 7 (siehe zum Beispiel die Figur 2) strömen und ein entsprechender lokaler Wärmeeintrag wird vermieden.

Figur 11 zeigt ein Ausführungsbeispiel eines Innengehäuses 6 mit Axialöffnungen 21, von denen eine exemplarisch mit einem Abschirmelement 12 abgedeckt ist, das an zwei seitlich einander gegenüberliegenden Enden an der äußeren Oberfläche des Seitenteils 20 angeschlossen oder einteilig mit diesem ausgeführt ist. Somit entstehen zwei einander gegenüberliegende Ablauföffnungen 22, die radial nach außen und radial nach innen gerichtet sind, aber auch in Umfangsrichtung oder diagonal ausgerichtet sein könnten.

Neben der einen gezeigten Axialöffnung 21 könnten auch weitere oder alle der Axialöffnungen 21 mit einem solchen Abschirmelement 12 oder einem anders gestalteten Abschirmelement überdeckt werden.

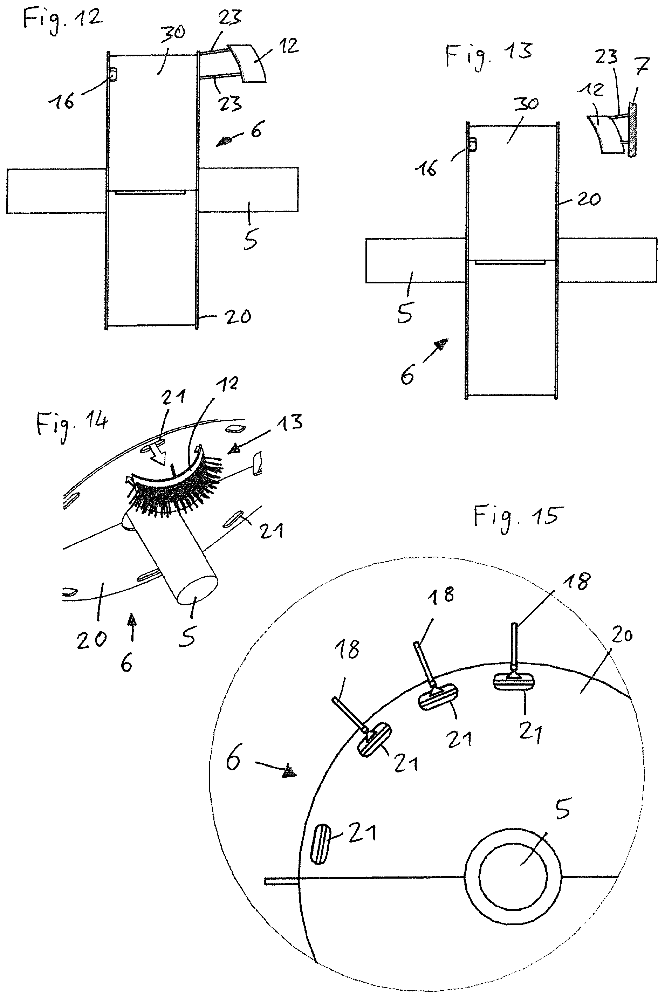

In der Figur 12 ist schematisch dargestellt, dass ein Abschirmelement 12 am Innengehäuse 6, beispielsweise am Seitenteil 20, befestigt ist, beispielsweise, jedoch nicht zwingend, mit Streben 23.

In der Figur 13 hingegen ist das Abschirmelement 12 am Außengehäuse 7 befestigt, ebenfalls beispielhaft, jedoch nicht zwingend, mit Streben 23.

In der Figur 14 ist schematisch ein optionaler Aspekt der vorliegenden Erfindung gezeigt, der bei allen Ausführungsformen anwendbar ist. Hier weist das Abschirmelement 12 eine Vielzahl von Öffnungen 13 auf, durch welche aus der Axialöffnung 21 (oder einer Radialöffnung) austretendes Schmiermittel zwar in Richtung des hier nicht dargestellten Außengehäuses strömen kann, dabei jedoch verteilt wird, um den Auftreffbereich des Schmiermittels auf dem Außengehäuse zu vergrößern und damit einen lokal begrenzten Wärmeeintrag zu reduzieren. Bevorzugt, jedoch nicht zwingend, ist dabei das Abschirmelement 12 bogenförmig ausgeführt, wobei die konkave Seite zur Axialöffnung 21 (oder Radialöffnung) gerichtet ist, um eine noch bessere Verteilung des durch das Abschirmelement 12 umgelenkten Schmiermittels zu erreichen.

In der Figur 15 ist ein optionales Merkmal der Erfindung dargestellt, wonach im Bereich der Axialöffnungen 21 (oder Radialöffnungen) jeweils eine Kühlmitteleinspritzung 18 vorgesehen ist, um die gewünschte Umlenkung des aus den Axialöffnungen 21 (oder Radialöffnungen) austretenden Schmiermittels zu erreichen und damit ein direktes Anströmen des Außengehäuses zu vermeiden.

Eine solche Kühlmitteleinspritzung 18 kann auch mit einem Abschirmelement 12 kombiniert werden.

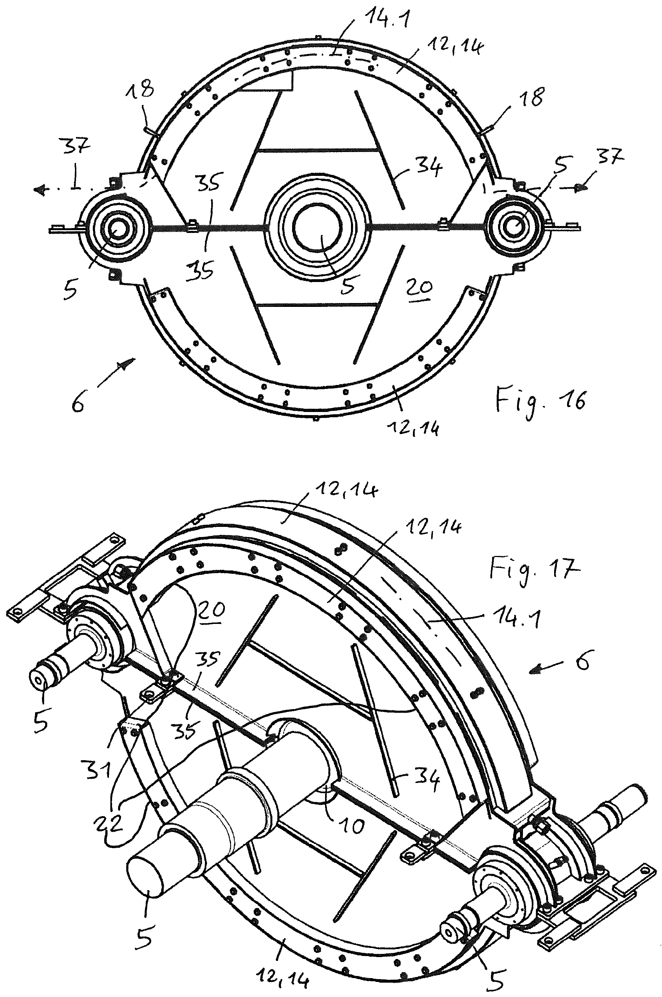

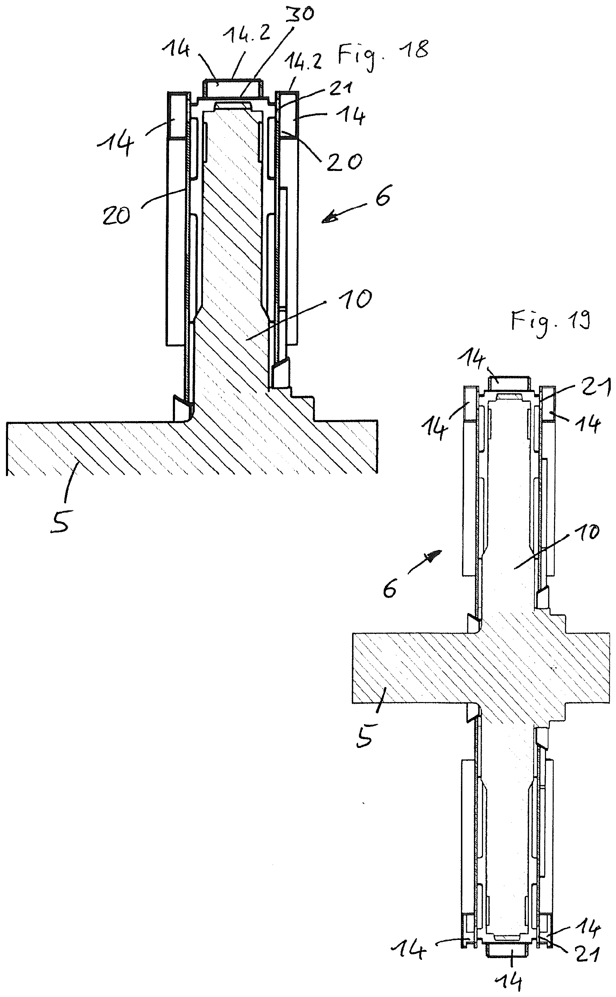

In den Figuren 16 bis 19 sind Ausführungsbeispiele dargestellt, bei denen die Abschirmelemente 12 zu Ablaufkanälen 14 weiterentwickelt wurden, sodass das aus den Öffnungen (Axialöffnungen und/oder Radialöffnungen) im Innengehäuse 6 austretende Schmiermittel nicht nur umgelenkt, sondern gerichtet abgeführt wird. Auch hier kann gegebenenfalls, jedoch nicht zwingend, eine Kühlmitteleinspritzung 18 in den Ablaufkanälen 14 vorgesehen sein.

In den gezeigten Ausführungsbeispielen erstrecken sich die Ablaufkanäle 14 mit ihrer Kanallängsachse 14.1 in der Umfangsrichtung, insbesondere des Großrads 10. Dies ist jedoch nicht zwingend.

Die Ablaufkanäle 14 werden im Umfang um die Kanallängsachse 14.1 vollumfänglich umschlossen, einerseits durch die Kanalwand 14.2 und andererseits die äußere Oberfläche des Innengehäuses 6, insbesondere die Mantelfläche 30 und das Seitenteil 20.

In der Figur 17 ist der auf der Mantelfläche für das Großrad 10 angeordnete Kanal mit 12, 14 bezeichnet, weil er aus nicht sichtbaren in der Mantelfläche vorgesehenen Radialöffnungen, die innerhalb des Ablaufkanals 14 positioniert sind, ausströmendes Schmiermittel beziehungsweise Schmiermittelluftgemisch aufnimmt und ableitet. Gleichzeitig können, wie angedeutet, weitere Radialöffnungen außerhalb des Ablaufkanals 14 in der Mantelfläche vorgesehen sein.

Entsprechend könnten auch außerhalb der Ablaufkanäle 14 auf einem oder beiden Seitenteilen 20 Axialöffnungen vorgesehen sein. Umgekehrt können auch alle Radialöffnungen und/oder Axialöffnungen in einem oder mehreren Ablaufkanälen 14 münden.

Ferner kann der in der Figur 17 dargestellte Kanal auf der Mantelfläche als getrennt von den Ablaufkanälen 14 und/oder Axialöffnungen und/oder Radialöffnungen angeordneter Kühlmittelkanal 24 ausgeführt sein, wie er zum Beispiel in der Figur 2 gezeigt ist.

Besonders aus den Figuren 16 und 17 ist ersichtlich, dass die Seitenteile 20 vorteilhaft mit Verstärkungsrippen 34 stabilisiert werden können. Ferner weist das Gehäuseoberteil und das Gehäuseunterteil jeweils einen Flansch 35 auf, um die beiden Gehäuseteile aneinander zu verschrauben und um an diesen Flanschen 35 beispielsweise die Laschen 31 zur Lagerung im Außengehäuse anzuschließen. Dies kann bei allen hier gezeigten Ausführungsformen und Abwandlungen derselben vorgesehen sein, ist jedoch auch nicht zwingend.

Die Ablaufkanäle 14 münden mit Ablauföffnungen 22 frei in einem Raum zwischen dem Innengehäuse 6 und dem hier nicht näher dargestellten Außengehäuse. Alternativ könnte auch eine Leitung 37 an den Ablaufkanälen 14 angeschlossen sein, über welche das in den Ablaufkanälen 14 geführte Medium abgeführt wird. Dies ist schematisch in der Figur 16 gezeigt. Diese Leitung 37 könnte beispielsweise an einer Absaugpumpe angeschlossen sein.

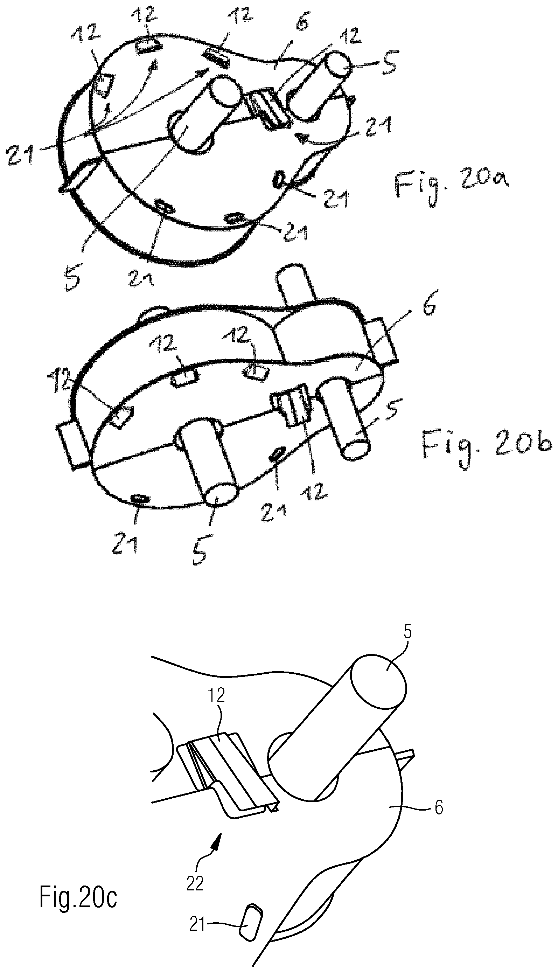

In den Figuren 20a bis 20c ist ein weiteres Ausführungsbeispiel eines Stirnradgetriebes, jedoch ohne Darstellung des Außengehäuses, gezeigt, bei welchem die entlang des Umfangs verteilt angeordneten Axialöffnungen 21 im Oberteil des Innengehäuses 6 mit Abschirmelementen 12 einer ersten Form, beispielsweise die genannte Kiemenform, abgedeckt sind und die vergleichsweise größere Axialöffnung 21 im Bereich des Verzahnungseingriffs zwischen dem hier nicht erkennbaren Großrad und dem Ritzel mit einem Abschirmelement 12 einer zweite Ausführungsform abgedeckt ist. Die Figuren 20a und 20b zeigen das Innengehäuse 6 aus verschiedenen perspektivischen Ansichten, die Figur 20c zeigt eine vergleichsweise vergrößerte Ansicht im Bereich des Verzahnungseingriffs.

Bei dem aus der Figur 20c ersichtlichen Ausführungsbeispiel des Abschirmelements 12 ist ersichtlich, dass dieses Abschirmelement 12 zu einer asymmetrischen Umlenkung des aus der Axialöffnung 21 ausströmenden Schmiermittels beziehungsweise Schmiermittelluftgemischs führt. Anhand dieses Abschirmelements 12 werden einige Merkmale erläutert, die jeweils für sich oder auch gemeinsam ausgeführt werden können. Diese Merkmale können ferner auch bei anderen Abschirmelementen 12, mit welchen Axialöffnungen 21 oder Radialöffnungen 16 abgedeckt werden, ausgeführt werden.

Das Abschirmelement 12 kann einteilig oder mehrteilig ausgeführt sein.

Bevorzugt verschließt das Abschirmelement 12 wenigstens eine Seite der Axialöffnung 21 (oder Radialöffnung 16).

Die Hauptfläche des Abschirmelements 12 ist bevorzugt in einem Winkel zwischen 0° und 45° zur Fläche beziehungsweise zu dem Flächenbereich des Innengehäuses 6, hier zur Seitenfläche des Innengehäuses 6, geneigt, in welchem die Axialöffnung 21 (oder Radialöffnung 16) angeordnet ist.

Die seitlichen Flächen des Abschirmelements 12 sind bevorzugt gegenüber der Hauptfläche des Abschirmelements 12 mit einem stumpfen Winkel angeordnet, das heißt mit einem Winkel von mehr als 90°.

Um eine bessere Montage und Demontage des Innengehäuses 6 zu gewährleisten, ist das Abschirmelement 12 bevorzugt nur am Oberteil oder nur am Unterteil des Innengehäuses 6 befestigt und/oder ist lösbar am Innengehäuse 6 befestigt.

Das Abschirmelement 12 überdeckt bevorzugt die gesamte Fläche der Axialöffnung 21 (oder Radialöffnung 16), bevorzugt zumindest jedoch mehr als 10 Prozent der Fläche.

Bei dem Abschirmelement 12, das die Axialöffnung 21 im Verzahnungseingriff abdeckt, gemäß der Ausführungsform in den Figuren 20a bis 20c, ist die Ablauföffnung 22 am unteren Ende des Abschirmelements 12 in eine der beiden Seitenflächen hinein, hier bis zur Teilfuge zwischen dem Oberteil und dem Unterteil des Innengehäuses 6, verlängert, sodass die Abströmung nach unten und auf einer Seite nach außen erfolgen kann. Damit wird die genannte asymmetrische Umlenkung erreicht. Andere Ausführungsformen, bei denen die Ablauföffnung 22 unten und nur auf einer Seite oder nur auf entgegengesetzten Seiten, bei unten verschlossenem Abschirmelement 12, vorgesehen ist, sind möglich.

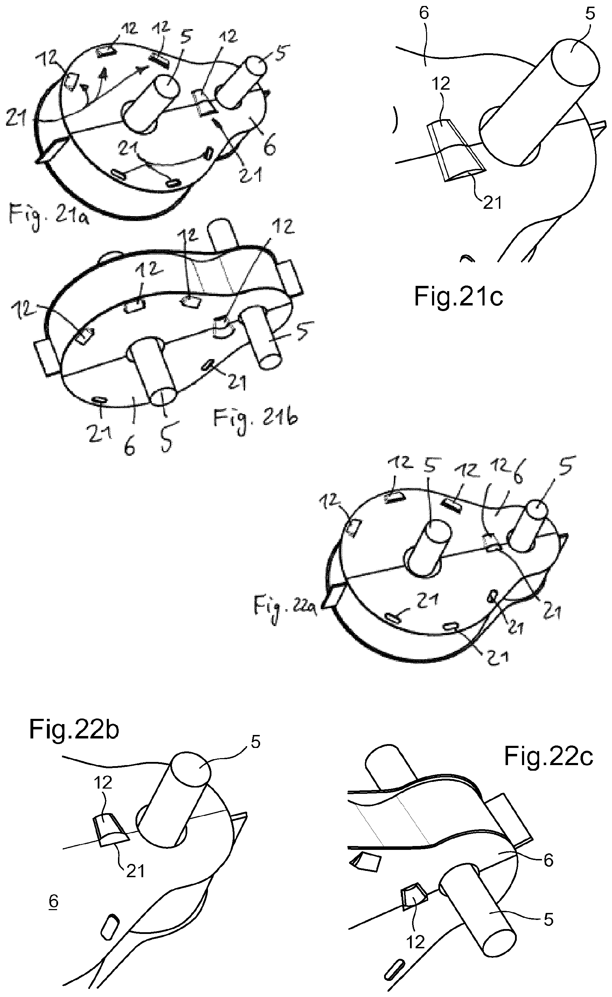

Bei der Ausgestaltung gemäß den Figuren 21a bis 21c, die wiederum verschiedene Schrägansichten und eine vergrößerte Darstellung analog der Figuren 20a bis 20c zeigen, setzt sich das Abschirmelement 12 im Bereich des Verzahnungseingriffs aus zwei jeweils einteilig mit dem Innengehäuse 6 hergestellten Teilen zusammen. Entsprechend weist auch das Abschirmelement 12 eine Teilfuge auf, wenn das Innengehäuse 6 eine Teilfuge aufweist und sich das Abschirmelement 12 über die Teilfuge des Innengehäuses 6 hinweg erstreckt.

Bei dieser Ausführungsform, jedoch nicht zwingend, ist die Hauptfläche des Abschirmelements 12 bogenförmig. Eine solche bogenförmige Ausführungsform könnte auch bei den anderen Ausführungsbeispielen vorgesehen sein.

Der von dem Abschirmelement 12 umschlossene Querschnitt erweitert sich in Richtung der Ausströmung. Auch dies ist nicht zwingend. Eine solche Erweiterung kommt sowohl bei sich entsprechend erweiternden Axialöffnungen 21 oder Radialöffnungen 16 in Betracht, aber auch bei sich nicht in dieser Richtung erweiternden Axialöffnungen 21 oder Radialöffnungen 16.

Die Ausführungsform gemäß den Figuren 22a bis 22c entspricht weitgehend jeder der Figuren 21a bis 21c. Jedoch überdeckt hier das Abschirmelement 12 die Axialöffnung 21 nur im Bereich des Oberteils des Innengehäuses 6 und kann somit einteilig ausgeführt sein.

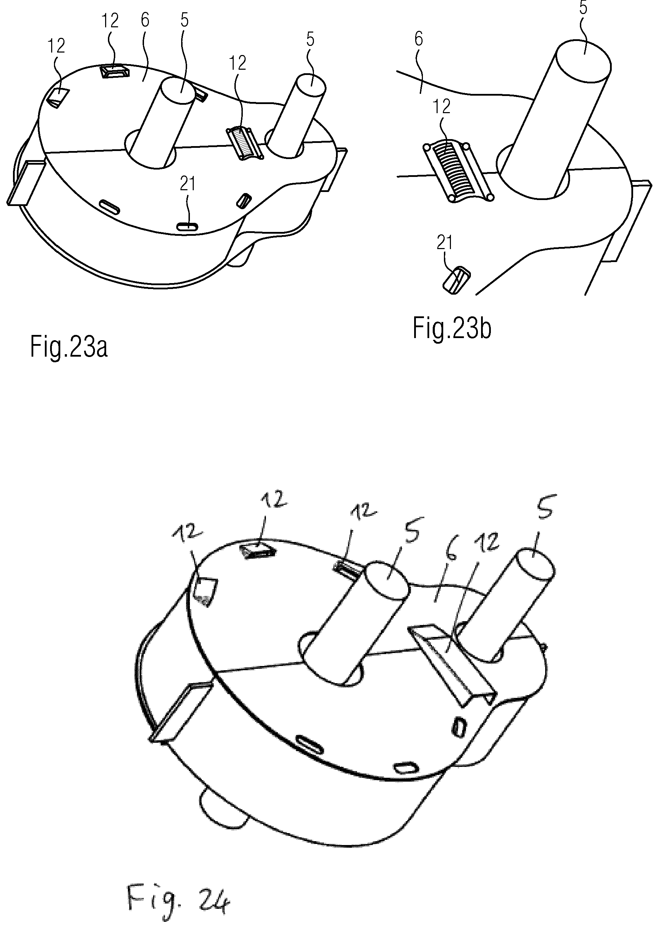

Bei der Ausgestaltung gemäß den Figuren 23a und 23b weist eine seitliche Hälfte des Abschirmelements 12 Öffnungen auf, um eine zusätzliche Verteilung des Schmiermittelluftgemischs zu erreichen. Beispielsweise kann hierfür ein perforiertes Blech als Abschirmelement 12 verwendet werden.

Bei der Ausgestaltung gemäß der Figur 24 ist exemplarisch dargestellt, dass die Hauptfläche des Abschirmelements 12 winklig zueinander angeordnete Teilflächen umfassen kann, um das Schmiermittelluftgemisch gezielter umzulenken. Im gezeigten Ausführungsbeispiel, jedoch nicht zwingend, erstreckt sich das Abschirmelement 12 bis nahe dem unteren Rand des Innengehäuses 6, um das Schmiermittelluftgemisch zielgerichtet in den Ölsumpf abführen zu können.

Die Gestaltung des Abschirmelements 12 mit mehreren zueinander winkligen flächigen Bereichen der Hauptfläche vermeidet, dass das Schmiermittelluftgemisch am Abschirmelement 12 zurückprallt. Die Anordnung der Flächen ist derart, dass diese bevorzugt schräg und somit nicht senkrecht zur Strömungsrichtung des Schmiermittelluftgemisches stehen.

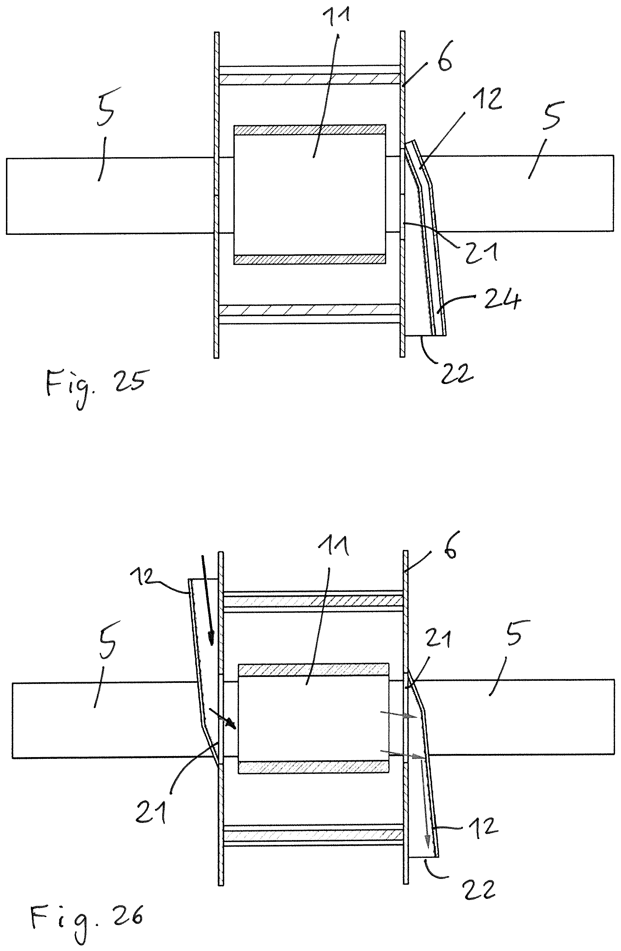

In der Figur 25 ist exemplarisch dargestellt, dass das Abschirmelement 12 doppelwandig ausgeführt ist, um einen Kühlmittelkanal 24 auszubilden. Damit kann zielgerichtet in diesem Bereich die Temperatur des ausströmenden Schmiermittelluftgemischs reduziert werden. Besonders im Bereich des Verzahnungseingriffs ist dies günstig, da hier die höchsten Temperaturen entstehen. Aus dem Kühlmittelkanal 24, der auch Öl führen kann, kann gemäß einer nicht gezeigten Ausführungsform Kühlmittel in das aus der Axialöffnung 21 (oder Radialöffnung 16) austretende Schmiermittelluftgemisch eingespritzt werden, oder aber auch direkt auf den Verzahnungseingriff.

Bei der Ausgestaltung gemäß der Figur 26 ist exemplarisch dargestellt, dass die Abschirmelemente 12 auf entgegengesetzten Seiten des Innengehäuses 6, insbesondere zur Abdeckung der Axialöffnungen 21 im Bereich des Verzahnungseingriffs, unterschiedlich ausgeführt sein können. So kann auf einer Seite des Innengehäuses 6, die eine Saugseite ausbildet, Luft oder ein Schmiermittelluftgemisch über die mit dem Abschirmelement 12 abgedeckte Axialöffnung 21 eingesaugt werden und über die entgegengesetzte Axialöffnung 21 auf der anderen Seite des Innengehäuses 6 abgeleitet und mit dem dortigen Abschirmelement 12 bis zur Ablauföffnung 22 umgelenkt werden. Auf der Saugseite und/oder der Druckseite könnte eine Kühlmitteleinspritzung, insbesondere Kühlöleinspritzung, vorgesehen sein.

Beispielsweise erstreckt sich, wie dargestellt, auf der Saugseite das Abschirmelement 12 ausgehend von der Axialöffnung 21 nach oben und auf der Druckseite ausgehend von der Axialöffnung 21 nach unten.

### Bezugszeichenliste

- 1: Stirnrad
- 2: Stirnrad
- 3: Stirnrad
- 4: Stirnrad
- 5: Welle
- 6: Innengehäuse
- 7: Außengehäuse
- 8: Axial-Radiallager
- 9: Druckkammlagerung
- 9.1: Druckkamm
- 10: Großrad
- 11: Ritzel
- 12: Abschirmelement
- 13: Öffnung
- 14: Ablaufkanal
- 14.1: Kanallängsachse
- 14.2: Kanalwand
- 15: Kieme
- 16: Radialöffnung
- 17: Radiallager
- 18: Kühlmitteleinspritzung
- 19: Wellendrehachse
- 20: Seitenteil
- 21: Axialöffnung
- 22: Ablauföffnung
- 23: Strebe
- 24: Kühlmittelkanal
- 25: Düse
- 26: Laufrad
- 27: Antrieb
- 28: Pumpe
- 29: Zwischenrad
- 30: Mantelfläche
- 31: Lasche
- 32: Stellschraube
- 33: Inspektionsöffnung
- 34: Verstärkungsrippe
- 35: Flansch
- 36: Abschöpfkante
- 37: Leitung
- 38: Teilfuge

## Patentansprüche

1. Stirnradgetriebe mit wenigstens zwei verzahnten, jeweils auf einer Welle (5) angeordneten Stirnrädern (1, 2, 3, 4), deren Verzahnungen paarweise miteinander kämmen; wobei
die Stirnräder (1, 2, 3, 4) jeweils einen radial äußeren Umfang und zwei voneinander abgewandte Axialseiten aufweisen und die Stirnräder (1, 2, 3, 4) über dem größten Teil ihres radial äußeren Umfangs und über dem größten Teil ihrer voneinander abgewandten Axialseiten von einem Innengehäuse (6) umschlossen werden, das wiederum von einem separat hierzu angeordneten Außengehäuse (7) vollumfänglich umschlossen wird; wobei
die Stirnräder (1, 2, 3, 4) im Bereich ihrer Verzahnungen mit einem Schmiermittel beaufschlagt werden und das Innengehäuse (6) Axialöffnungen (21), die einer oder beiden Axialseiten wenigstens eines Stirnrads (1, 2, 3, 4) gegenüberstehen, und/oder Radialöffnungen (16), die dem radial äußeren Umfang wenigstens eines Stirnrads (1, 2, 3, 4) gegenüberstehen, aufweist, durch welche das Schmiermittel zumindest mittelbar aus dem Innengehäuse (6) ausströmen kann;
**dadurch gekennzeichnet, dass**
wenigstens eine, mehrere oder alle Axialöffnungen (21) und/oder Radialöffnungen (16) von einem zwischen dem Innengehäuse (6) und dem Außengehäuse (7) angeordneten Abschirmelement (12) überdeckt werden, wobei das Abschirmelement (12) derart oder mit einem solchen Abstand zur jeweils abgedeckten Axialöffnung (21) oder Radialöffnung (16) angeordnet ist, dass aus der Axialöffnung (21) oder Radialöffnung (16) ausströmendes Schmiermittel außerhalb des Innengehäuses (6) vom Abschirmelement (12) umgelenkt wird; und
wenigstens einer, mehreren oder allen Axialöffnungen (21) und/oder Radialöffnungen (16) eine Kühlmitteleinspritzung (18) zugeordnet ist, mit welcher Kühlmittel in das aus der Axialöffnung (21) oder Radialöffnung (16) ausströmende Schmiermittel derart eingespritzt wird, dass das aus der Axialöffnung (21) oder Radialöffnung (16) ausströmende Schmiermittel außerhalb des Innengehäuses (6) vom Kühlmittel umgelenkt wird.

2. Stirnradgetriebe gemäß Anspruch 1, **dadurch gekennzeichnet, dass** das wenigstens ein Abschirmelement (12) derart gegenüber der jeweils abgedeckten Axialöffnung (21) oder Radialöffnung (16) angeordnet ist, dass aus der Axialöffnung (21) oder Radialöffnung (16) ausströmendes Schmiermittel in Richtung entlang einer äußeren Oberfläche des Innengehäuses (6), das Innengehäuse (6) mehr oder minder berührend umgelenkt wird.

3. Stirnradgetriebe gemäß einem der Ansprüche 1 oder 2, **dadurch gekennzeichnet, dass** das wenigstens ein Abschirmelement (12) Öffnungen (13) aufweist und insbesondere als Lochblech ausgeführt ist, wobei die Öffnungen (13) jeweils einen maximalen Strömungsquerschnitt von einem Zwanzigstel, Fünfzigstel oder Hundertstel des Strömungsquerschnitts der vom Abschirmelement (12) abgedeckten Axialöffnung (21) oder Radialöffnung (16) aufweisen.

4. Stirnradgetriebe gemäß einem der Ansprüche 1 bis 3, **dadurch gekennzeichnet, dass** das wenigstens ein Abschirmelement (12) eine Bogenform aufweist, insbesondere mit einer der Axialöffnung (21) oder Radialöffnung (16) zugewandten konkaven Seite.

5. Stirnradgetriebe gemäß einem der Ansprüche 1 bis 4, **dadurch gekennzeichnet, dass** das wenigstens ein Abschirmelement (12) seitlich zur Axialöffnung (21) oder Radialöffnung (16) mit wenigstens einem oder zwei seitlichen Enden an einer äußeren Oberfläche des Innengehäuses (6) anliegt.

6. Stirnradgetriebe gemäß Anspruch 5, **dadurch gekennzeichnet, dass** das wenigsten ein Abschirmelement (12) auf zwei entgegengesetzten Seiten der Axialöffnung (21) oder Radialöffnung (16) an der äußeren Oberfläche des Innengehäuses (6) anliegt.

7. Stirnradgetriebe gemäß Anspruch 5, **dadurch gekennzeichnet, dass** das wenigsten ein Abschirmelement (12) mit drei von vier seitlichen Enden seitlich zur Axialöffnung (21) oder Radialöffnung (16) an der äußeren Oberfläche des Innengehäuses (6) anliegt und insbesondere als tiefgezogene Kieme (15) in einem Seitenteil (20) des Innengehäuses (6) ausgeführt ist.

8. Stirnradgetriebe gemäß einem der Ansprüche 1 bis 7, **dadurch gekennzeichnet, dass** eine Vielzahl von einzelnen Abschirmelementen (12) für eine Vielzahl von Axialöffnungen (21) und/oder Radialöffnungen (16) vorgesehen ist, wobei die Abschirmelemente (12) jeweils am Innengehäuse (6) oder Außengehäuse (7) befestigt sind.

9. Stirnradgetriebe gemäß einem der Ansprüche 1 bis 7, **dadurch gekennzeichnet, dass** das wenigstens ein Abschirmelement (12) als geschlossener Ablaufkanal (14) ausgeführt ist, der sich mit einer Kanallängsachse (14.1), die in Umfangsrichtung vom Innengehäuse (6) und einer Kanalwand (14.2) vollständig umschlossen wird, entlang einer äußeren Oberfläche des Innengehäuses (6) erstreckt.

10. Stirnradgetriebe gemäß Anspruch 9, **dadurch gekennzeichnet, dass** sich das wenigstens ein Ablaufkanal (14) mit seiner Längsachse (14.1) in Umfangsrichtung eines Stirnrads (1, 2, 3, 4) erstreckt.

11. Stirnradgetriebe gemäß einem der Ansprüche 9 oder 10, **dadurch gekennzeichnet, dass** sich das wenigstens ein Ablaufanal (14) mit seiner Längsachse (14.1) vertikal erstreckt.

12. Stirnradgetriebe gemäß einem der Ansprüche 1 bis 11, **dadurch gekennzeichnet, dass** wenigstens einige Axialöffnungen (21) mit Abstand zueinander in Umfangsrichtung wenigstens eines Stirnrads (1, 2, 3, 4) entlang der Verzahnung des Stirnrads (1, 2, 3, 4) angeordnet sind.

13. Stirnradgetriebe gemäß Anspruch 12, **dadurch gekennzeichnet, dass** die Abstände unregelmäßig sind.

14. Stirnradgetriebe gemäß Anspruch 14, **dadurch gekennzeichnet, dass** die wenigsten eine Kühlmitteleinspritzung (18) ausgeführt ist um eine Verteilung und/oder Umlenkung des Schmiermittelstroms zu bewirken.

15. Stirnradgetriebe gemäß einem der Ansprüche 1 bis 14, **dadurch gekennzeichnet, dass** im Innengehäuse (6) im Bereich eines Verzahnungseingriffs zwischen zwei Stirnrädern (1, 2, 3, 4) auf beiden Axialseiten des Verzahnungseingriffs jeweils eine mit einem Abschirmelement (12) auf einer Axialseite und mit einem zweiten Abschirmelement (12) auf der anderen Axialseite vorgesehene Axialöffnung (21) vorgesehen ist, wobei das zweite Abschirmelement (12) zusammen mit dem Innengehäuse (6) einen Saugkanal zum Zuführen eines Mediums, insbesondere Luft, in den Verzahnungseingriff ausbildet, und das Abschirmelement (12) zusammen mit dem Innengehäuse (6) einen Druckkanal zum Abführen von ausströmendem Schmiermittel ausbildet.

16. Stirnradgetriebe gemäß Anspruch 15, **dadurch gekennzeichnet, dass** sich der Saugkanal ausgehend von der Axialöffnung (21) nach oben erstreckt und sich der Druckkanal, ausgehend von der Axialöffnung (21), nach unten erstreckt.

## Claims

1. Spur gear transmission having at least two toothed spur gears (1, 2, 3, 4) which are each arranged on a shaft (5) and the toothing systems of which mesh with one another in pairs; wherein
the spur gears (1, 2, 3, 4) each have a radially outer circumference and two axial sides facing away from one another, and the spur gears (1, 2, 3, 4) are enclosed over most of their radially outer circumference and over most of their axial sides facing away from one another by an inner housing (6) which is in turn enclosed over its entire circumference by an outer housing (7) arranged separately thereto; wherein
the spur gears (1, 2, 3, 4) are acted upon by a lubricant in the region of their toothing systems, and the inner housing (6) has axial openings (21) which are opposite one or both axial sides of at least one spur gear (1, 2, 3, 4), and/or radial openings (16) which are opposite the radially outer circumference of at least one spur gear (1, 2, 3, 4), through which the lubricant can flow out of the inner housing (6) at least indirectly;
**characterized in that**
at least one, a plurality of or all axial openings (21) and/or radial openings (16) are covered by a shielding element (12) arranged between the inner housing (6) and the outer housing (7), wherein the shielding element (12) is arranged in such a way or at such a distance from the respectively covered axial opening (21) or radial opening (16) that lubricant flowing out of the axial opening (21) or radial opening (16) is deflected outside the inner housing (6) by the shielding element (12); and
at least one, a plurality of or all axial openings (21) and/or radial openings (16) are assigned a coolant injection means (18), by way of which coolant is injected into the lubricant flowing out of the axial opening (21) or radial opening (16) in such a way that the lubricant flowing out of the axial opening (21) or radial opening (16) is deflected outside the inner housing (6) by the coolant.

2. Spur gear transmission according to Claim 1, **characterized in that** the at least one shielding element (12) is arranged opposite the respectively covered axial opening (21) or radial opening (16) in such a way that lubricant flowing out of the axial opening (21) or radial opening (16) is deflected in a direction along an outer surface of the inner housing (6) so as to make contact with the inner housing (6) to a greater or lesser extent.

3. Spur gear transmission according to either of Claims 1 or 2, **characterized in that** the at least one shielding element (12) has openings (13) and is designed, in particular, as a perforated plate, wherein the openings (13) each have a maximum flow cross section of one twentieth, fiftieth or hundredth of the flow cross section of the axial opening (21) or radial opening (16) covered by the shielding element (12).

4. Spur gear transmission according to one of Claims 1 to 3, **characterized in that** the at least one shielding element (12) has an arcuate shape, in particular with a concave side facing the axial opening (21) or radial opening (16).

5. Spur gear transmission according to one of Claims 1 to 4, **characterized in that** the at least one shielding element (12) bears with at least one or two lateral ends against an outer surface of the inner housing (6) laterally with respect to the axial opening (21) or radial opening (16).

6. Spur gear transmission according to Claim 5, **characterized in that** the at least one shielding element (12) bears against the outer surface of the inner housing (6) on two opposite sides of the axial opening (21) or radial opening (16).

7. Spur gear transmission according to Claim 5, **characterized in that** the at least one shielding element (12) bears with three of four lateral ends laterally with respect to the axial opening (21) or radial opening (16) against the outer surface of the inner housing (6) and is configured, in particular, as deep-drawn jaws (15) in a side part (20) of the inner housing (6).

8. Spur gear transmission according to one of Claims 1 to 7, **characterized in that** a multiplicity of individual shielding elements (12) are provided for a multiplicity of axial openings (21) and/or radial openings (16), wherein the shielding elements (12) are each fastened to the inner housing (6) or outer housing (7).

9. Spur gear transmission according to one of Claims 1 to 7, **characterized in that** the at least one shielding element (12) is configured as a closed outflow duct (14) which extends along an outer surface of the inner housing (6) with a duct longitudinal axis (14.1) which is completely enclosed in the circumferential direction by the inner housing (6) and a duct wall (14.2).

10. Spur gear transmission according to Claim 9, **characterized in that** the at least one outflow duct (14) extends with its longitudinal axis (14.1) in the circumferential direction of a spur gear (1, 2, 3, 4).

11. Spur gear transmission according to either of Claims 9 or 10, **characterized in that** the at least one outflow duct (14) extends vertically with its longitudinal axis (14.1).

12. Spur gear transmission according to one of Claims 1 to 11, **characterized in that** at least some axial openings (21) are arranged at a distance from one another in the circumferential direction of at least one spur gear (1, 2, 3, 4) along the toothing system of the spur gear (1, 2, 3, 4).

13. Spur gear transmission according to Claim 12, **characterized in that** the distances are irregular.

14. Spur gear transmission according to Claim 14, **characterized in that** the at least one coolant injection means (18) is designed to bring about a distribution and/or deflection of the lubricant flow.

15. Spur gear transmission according to one of Claims 1 to 14, **characterized in that**, in the inner housing (6), in the region of a toothing engagement between two spur gears (1, 2, 3, 4), an axial opening (21) provided with a shielding element (12) on one axial side and with a second shielding element (12) on the other axial side is provided on each of the two axial sides of the toothing engagement, wherein the second shielding element (12) together with the inner housing (6) forms a suction duct for supplying a medium, in particular air, into the toothing engagement, and the shielding element (12) together with the inner housing (6) forms a pressure duct for discharging outflowing lubricant.

16. Spur gear transmission according to Claim 15, **characterized in that** the suction duct extends upwards starting from the axial opening (21), and the pressure duct extends downwards starting from the axial opening (21).

## Revendications

1. Réducteur à engrenage droit avec au moins deux roues droites (1, 2, 3, 4) à denture, disposées chacune sur un arbre (5), dont les dentures s'engrènent entre elles par paires ;
les roues droites (1, 2, 3, 4) comportant chacune une périphérie radialement extérieure et deux côtés axiaux opposés l'un à l'autre et les roues droites (1, 2, 3, 4) étant enfermées, sur la majeure partie de leur périphérie radialement extérieure et sur la majeure partie de leurs côtés axiaux opposés les uns aux autres, par un boîtier intérieur (6), qui est enfermé à son tour sur la totalité de la périphérie par un boîtier extérieur (7) disposé séparément par rapport à celui-ci ;
les roues droites (1, 2, 3, 4) étant soumises à l'action d'un lubrifiant dans la zone de leurs dentures et le boîtier intérieur (6) comportant des ouvertures axiales (21), qui font face à un ou aux deux côtés axiaux d'au moins une roue droite (1, 2, 3, 4), et/ou des ouvertures radiales (16), qui font face à la périphérie radialement extérieure d'au moins une roue droite (1, 2, 3, 4), par lesquelles le lubrifiant peut s'écouler au moins indirectement hors du boîtier intérieur (6) ;
**caractérisé en ce que**
au moins une, plusieurs ou la totalité des ouvertures axiales (21) et/ou des ouvertures radiales (16) sont recouvertes par un élément de protection (12) disposé entre le boîtier intérieur (6) et le boîtier extérieur (7), l'élément de protection (12) étant disposé de telle manière ou à une telle distance par rapport à l'ouverture axiale (21) ou l'ouverture radiale (16) respectivement recouverte que du lubrifiant s'écoulant hors de l'ouverture axiale (21) ou de l'ouverture radiale (16) est dévié par l'élément de protection (12) à l'extérieur du boîtier intérieur (6) ; et
est associé au moins à une, plusieurs ou la totalité des ouvertures axiales (21) et/ou des ouvertures radiales (16) un système d'injection de liquide de refroidissement (18), avec lequel du liquide de refroidissement est injecté dans le lubrifiant s'écoulant hors de l'ouverture axiale (21) ou de l'ouverture radiale (16) de telle manière que le lubrifiant s'écoulant hors de l'ouverture axiale (21) ou de l'ouverture radiale (16) est dévié par le liquide de refroidissement à l'extérieur du boîtier intérieur (6).

2. Réducteur à engrenage droit selon la revendication 1, **caractérisé en ce que** l'au moins un élément de protection (12) est disposé par rapport à l'ouverture axiale (21) ou l'ouverture radiale (16) respectivement recouverte de telle manière que du lubrifiant s'écoulant hors de l'ouverture axiale (21) ou de l'ouverture radiale (16) est dévié en direction le long d'une surface extérieure du boîtier intérieur (6), tout en touchant plus ou moins le boîtier intérieur (6).

3. Réducteur à engrenage droit selon l'une des revendications 1 ou 2, **caractérisé en ce que** l'au moins un élément de protection (12) comporte des ouvertures (13) et est réalisé en particulier en tant que tôle trouée, les ouvertures (13) comportant chacune une section transversale d'écoulement maximale d'un vingtième, d'un cinquantième ou d'un centième de la section transversale d'écoulement de l'ouverture axiale (21) ou de l'ouverture radiale (16) recouverte par l'élément de protection (12).

4. Réducteur à engrenage droit selon l'une des revendications 1 à 3, **caractérisé en ce que** l'au moins un élément de protection (12) présente une forme d'arc, en particulier avec un côté concave tourné vers l'ouverture axiale (21) ou l'ouverture radiale (16).

5. Réducteur à engrenage droit selon l'une des revendications 1 à 4, **caractérisé en ce que** l'au moins un élément de protection (12) repose sur une surface extérieure du boîtier intérieur (6) par au moins une ou deux extrémités latérales latéralement par rapport à l'ouverture axiale (21) ou l'ouverture radiale (16).

6. Réducteur à engrenage droit selon la revendication 5, **caractérisé en ce que** l'au moins un élément de protection (12) repose sur la surface extérieure du boîtier intérieur (6) sur deux côtés opposés de l'ouverture axiale (21) ou de l'ouverture radiale (16).

7. Réducteur à engrenage droit selon la revendication 5, **caractérisé en ce que** l'au moins un élément de protection (12) repose sur la surface extérieure du boîtier intérieur (6) par trois de quatre extrémités latérales latéralement à l'ouverture axiale (21) ou à l'ouverture radiale (16) et est réalisé en particulier comme une branchie (15) emboutie dans une partie latérale (20) du boîtier intérieur (6).

8. Réducteur à engrenage droit selon l'une des revendications 1 à 7, **caractérisé en ce qu'**une pluralité d'éléments de protection (12) individuels est prévue pour une pluralité d'ouvertures axiales (21) et/ou d'ouvertures radiales (16), les éléments de protection (12) étant fixés chacun sur le boîtier intérieur (6) ou le boîtier extérieur (7).

9. Réducteur à engrenage droit selon l'une des revendications 1 à 7, **caractérisé en ce que** l'au moins un élément de protection (12) est réalisé comme un canal d'évacuation (14) fermé, qui s'étend le long d'une surface extérieure du boîtier intérieur (6) avec un axe longitudinal de canal (14.1), qui est totalement enfermé dans la direction périphérique par le boîtier intérieur (6) et une paroi de canal (14.2).

10. Réducteur à engrenage droit selon la revendication 9, **caractérisé en ce que** l'au moins un canal d'évacuation (14) s'étend par son axe longitudinal (14.1) dans la direction périphérique d'une roue droite (1, 2, 3, 4).

11. Réducteur à engrenage droit selon l'une des revendications 9 ou 10, **caractérisé en ce que** l'au moins un canal d'évacuation (14) s'étend verticalement par son axe longitudinal (14.1).

12. Réducteur à engrenage droit selon l'une des revendications 1 à 11, **caractérisé en ce qu'**au moins certaines ouvertures axiales (21) sont disposées à distance les unes par rapport aux autres dans la direction périphérique d'au moins une roue droite (1, 2, 3, 4) le long de la denture de la roue droite (1, 2, 3, 4).

13. Réducteur à engrenage droit selon la revendication 12, **caractérisé en ce que** les distances sont irrégulières.

14. Réducteur à engrenage droit selon la revendication 14, **caractérisé en ce que** l'au moins un système d'injection de liquide de refroidissement (18) est réalisé pour entraîner une répartition et/ou un renvoi du flux de lubrifiant.

15. Réducteur à engrenage droit selon l'une des revendications 1 à 14, **caractérisé en ce que** respectivement une ouverture axiale (21) prévue avec un élément de protection (12) sur un côté axial et avec un deuxième élément de protection (12) sur l'autre côté axial est prévue dans le boîtier intérieur (6) dans la zone d'une prise de denture entre deux roues droites (1, 2, 3, 4) sur deux côtés axiaux de la prise de denture, le deuxième élément de protection (12) formant conjointement avec le boîtier intérieur (6) un canal d'aspiration destiné à amener un milieu, en particulier de l'air, dans la prise de denture et l'élément de protection (12) formant conjointement avec le boîtier intérieur (6) un canal de pression destiné à évacuer un flux sortant de lubrifiant.

16. Réducteur à engrenage droit selon la revendication 15, **caractérisé en ce que** le canal d'aspiration s'étend vers le haut en partant de l'ouverture axiale (21) et le canal de pression s'étend vers le bas en partant de l'ouverture axiale (21).
